# EUROPÄISCHE PATENTSCHRIFT

(11) **EP 0 863 481 B1**
(45) Veröffentlichungstag und Bekanntmachung des Hinweises auf die Patenterteilung: **12.10.2005**
(21) Anmeldenummer: 98103915.9
(22) Anmeldetag: 05.03.1998
(51) Int. Cl.: G06K 17/00

(54) **Anlage zur Bearbeitung von Chip- und/oder Magnetstreifenkarten**
Device for processing chip cards and/or cards having a magnetic strip
Dispositif de traitement de cartes à puce et/ou à piste magnétique

(30) Priorität: 08.03.1997 DE 19709561
(43) Veröffentlichungstag der Anmeldung: 09.09.1998
(73) Patentinhaber: BÖWE CARDTEC GmbH, 33106 Paderborn (DE)
(72) Erfinder: Meyer-Wittreck, Udo, 33397 Rietberg (DE); Krupke, Frank, 59494 Soest (DE); Rübbelke, Hermann, 33129 Delbrück (DE); Röbke, Steffen, 33098 Paderborn (DE)
(74) Vertreter: Hanewinkel, Lorenz

(56) Entgegenhaltungen:
- DE-A- 3 049 607
- US-A- 4 772 782
- US-A- 4 825 054

## Beschreibung

Die Erfindung bezieht sich auf eine Anlage zur Bearbeitung von Chip- und/oder Magnetstreifenkarten gemäß dem Oberbegriff des Hauptanspruchs.
Aus der US-A-4772 782 ist eine Kreditkarte bekannt, die mit einem Magnetstreifen und einem Halbleiterchip bestückt ist, deren Dateninhalte korreliert sind und zu denen bei einer Kartenpersonalisierung ein Aufdruck erstellt wird, zu dem korrelierte Informationen in den Halbleiterchip eingebracht und auf den Magnetstreifen aufgebracht werden. Alternativ kann die Reihenfolge der Informationsein- bzw. -aufbringung von dem Magnetstreifen oder dem Chip ausgehend vorgenommen werden.
Weiterhin ist aus der US-A-4 825 054 eine Bearbeitungsgerätelinie für Kreditkarten bekannt, die eingangs eine Vereinzelungsstation und ausgangs einen Stapler umfaßt. In den Bearbeitungsstationen werden Personalisierungsdaten in einen Halbleiterchip eingebracht, auf einen Magnetstreifen geschrieben und auf die Karte aufgedruckt. Die korrekte Bearbeitung wird nachgeprüft. Insbesondere werden Programmdaten in den Chip übertragen, was erhebliche Zeit beansprucht, während der die Karten in den Bearbeitungsstationen verweilen.

Eine derartige Anlage ist auch aus der DE 30 49 607 bekannt. Bei dieser Anlage durchlaufen die Karten, welche aus einem die zu bearbeitenden Karten enthaltenden Kartenvorratsmagazin entnommen werden, nacheinander erst die Chip- und/oder Magnetstreifen-Bearbeitungsstation, wo die änderbaren Daten aufgezeichnet werden, und dann die Kartenkörper-Bearbeitungsstation, wo die nicht änderbaren Daten aufgebracht werden. Dabei wird nach dem Aufzeichnen der Daten auf den Chip- und/oder Magnetstreifen überprüft, ob die Aufzeichnung ordnungsgemäß erfolgt ist. Dies kann in der Chip- und/oder Magnetstreifen-Bearbeitungsstation oder in einer separaten Kontrollstation erfolgen. Karten, bei denen die Datenaufzeichnung auf den Chip- und/oder Magnetstreifen nicht ordnungsgemäß erfolgte, werden der Kartenkörper-Bearbeitungsstation, wo die nicht änderbaren Daten aufgezeichnet werden, nicht mehr zugeführt. Diese Karten werden ausgesondert. Ein Problem bei einer derartigen Anlage ist allerdings der Kartendurchsatz, da die Bearbeitungszeiten in der Chip- und/oder Magnetstreifen-Bearbeitungsstation und der Kartenkörper-Bearbeitungsstation wesentlich voneinander verschieden sind. Ein typisches Beispiel: Bearbeitungszeit für Aufzeichnung der Daten auf einen Mikroprozessorchip ca. 20sec; Bearbeitungszeit für das Aufbringen von alphanumerischen Zeichen durch Laserbeschriftung auf den Kartenkörper ca. 6 sec. Die langsame "Chip-Personalisierung" begrenzt hier den Kartendurchsatz.

Eine weitere Anlage ist aus der EP 0 256 921 bekannt. Allerdings gestattet diese Anlage nur das Aufzeichnen von Daten auf den Chip- und/oder Magnetstreifen und nicht das Aufbringen von nicht änderbaren Daten auf den Kartenkörper. Diese Anlage umfaßt somit nur einen Typ von Bearbeitungsstation, wenn man die Chip-und Magnetstreifen-Bearbeitung als in einer Bearbeitungsstation integriert betrachtet. Da die Aufzeichnung der Daten in einer Chip-und/oder Magnetstreifen-Bearbeitungsstation sehr viel länger dauert als die Zeit für die Entnahme einer Karte aus dem Kartenvorratsmagazin, der Transport dieser Karte zur Chip-und/oder Magnetstreifen-Bearbeitungsstation und die Übergabe dieser Karte an dieselbe, wird in dieser Anlage die Chip-und/oder Magnetstreifen-Bearbeitungsstation mehrfach ausgeführt, d.h. während die zuerst transportierte Karte sich zur Datenaufzeichnung in einer Chip-und/oder Magnetstreifen-Bearbeitungsstation befindet, werden bereits die nächsten Chip-und/oder Magnetstreifen-Bearbeitungsstationen aufgefüllt usw. Zu diesem Zweck weist die Anlage mehrere nebeneinander angeordnete Chip-und/oder Magnetstreifen-Bearbeitungsstationen auf. Ein linear vor diesen Stationen verfahrbarer Greifer entnimmt die zu bearbeitenden Karten aus dem Kartenvorratsmagazin, transportiert sie zu den Chip-und/oder Magnetstreifen-Bearbeitungsstationen und steckt sie in diese hinein, wobei die Chip-und/oder Magnetstreifen-Bearbeitungsstationen sukzessive aufgefüllt werden. Ist eine Karte fertig, so zieht der Greifer diese Karte aus der Chip-und/oder Magnetstreifen-Bearbeitungsstation heraus und transportiert sie zu einem Ablagemagazin. Für das Aufbringen von nicht änderbaren Daten auf den Kartenkörper, z.B. mittels Laserbeschriftung, müßten die Karten aus dem Ablagemagazin entnommen und einer anderen Anlage zugeführt werden. Mit einer derartigen Anlage, einer sogenannten Kartenpersonalisierungsanlage, werden einerseits karten-/benutzerspezifische Daten auf den Chip (Halbleiterbaustein) und/oder den Magnetstreifen aufgezeichnet und andererseits karten-/benutzerspezifische Daten auf den Kartenkörper aufgebracht. Hierzu weist eine solche Anlage eine Chip- und/oder Magnetstreifen-Bearbeitungsstation, in der die Chip- und ggf. die Magnetstreifen-Bearbeitung in bekannter Weise integriert ist, und eine Kartenkörper-Bearbeitungsstation auf. Während die auf den Chip bzw. den Magnetstreifen aufgezeichneten Daten in der Regel änderbar sind, da die entsprechenden Speichermedien mehrfach beschreibbar sind, sind die auf den Kartenkörper aufgebrachten Daten nicht änderbar. Die nicht änderbaren Daten werden beispielsweise durch Laserbeschriftung, Thermotransferdruck oder durch Prägen (Embossing) auf den Kartenkörper aufgebracht. Das Format dieser Karten ist durch internationale Normen standardisiert (siehe ISO 7810).

Aufgabe der Erfindung ist es, die eingangs bezeichnete Anlage zur Bearbeitung von Chip- und/oder Magnetstreifenkarten dahingehend zu verbessern, dass sie eine erhöhte Durchsatzleistung erbringt und dabei kompakt und konstruktiv einfach aufzubauen ist sowie flexibel erweiterbar und umkonfigurierbar ist.

Diese Aufgabe wird erfmdungsgemäß durch die Merkmale des Patentanspruches 1 gelöst. Die sich daran anschließenden Unteransprüche enthalten vorteilhafte und förderliche Ausgestaltungen der Erfindung.

Auf den beigefügten Zeichnungen wird die Erfindung nachfolgend näher beschrieben und die Vorteile erläutert. Es zeigt:
- Fig.1: eine perspektivische Ansicht der Anlage,

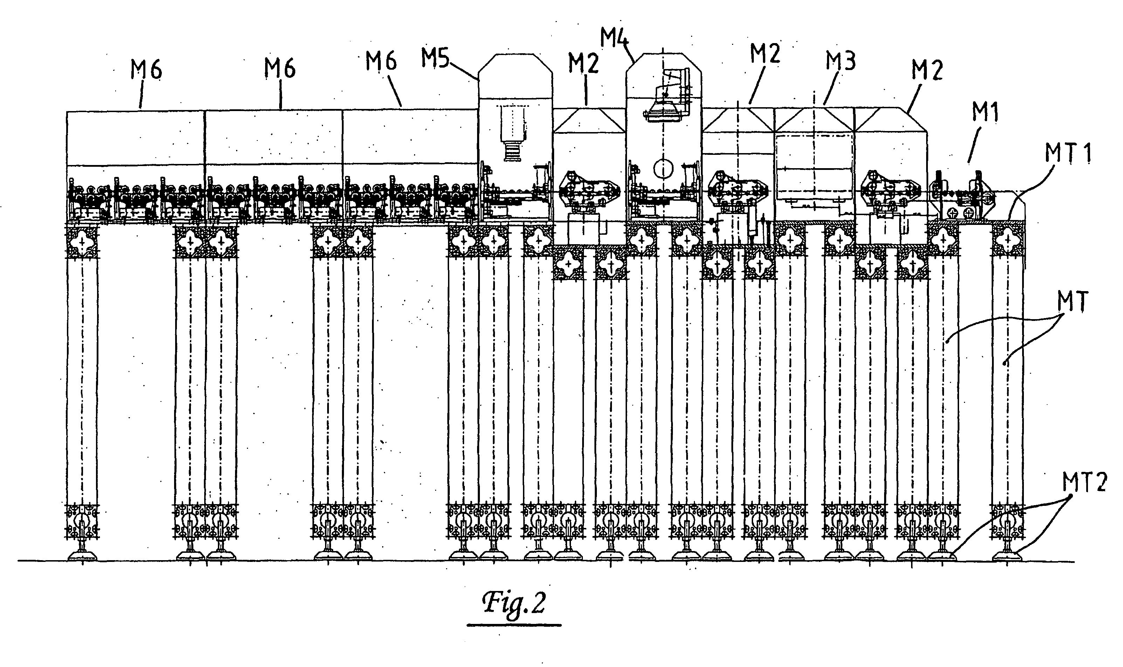

- Fig.2: eine Seitenansicht der Anlage,
- Fig.3: eine Draufsicht auf die Anlage,

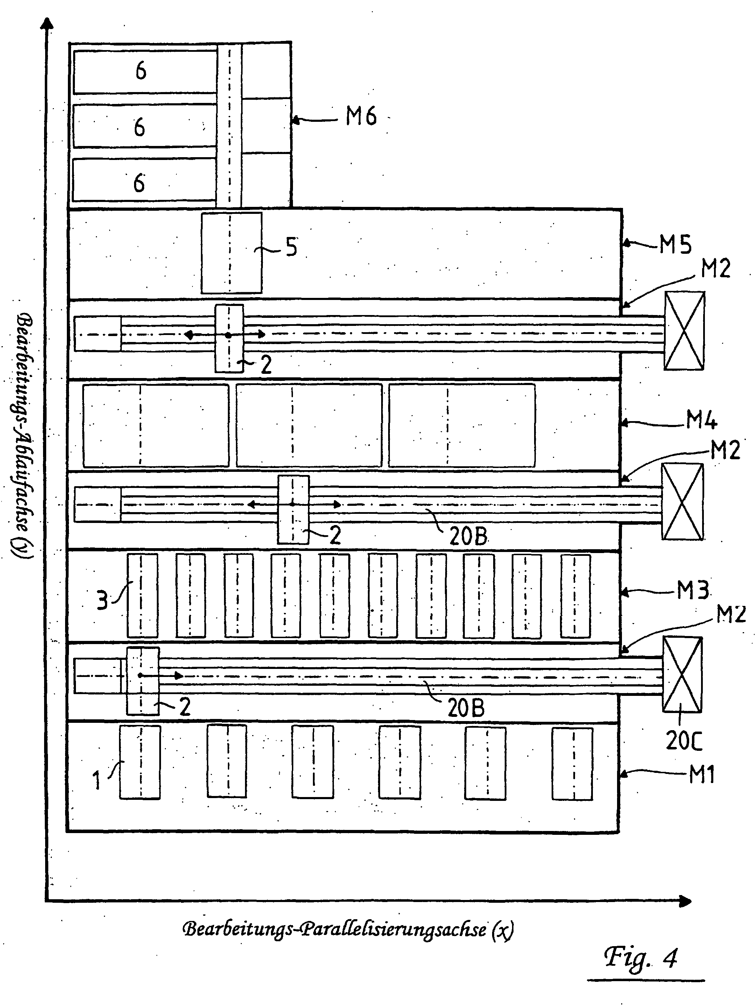

- Fig.4: eine schematische Ansicht der Anlagenkomponenten in der Draufsicht,

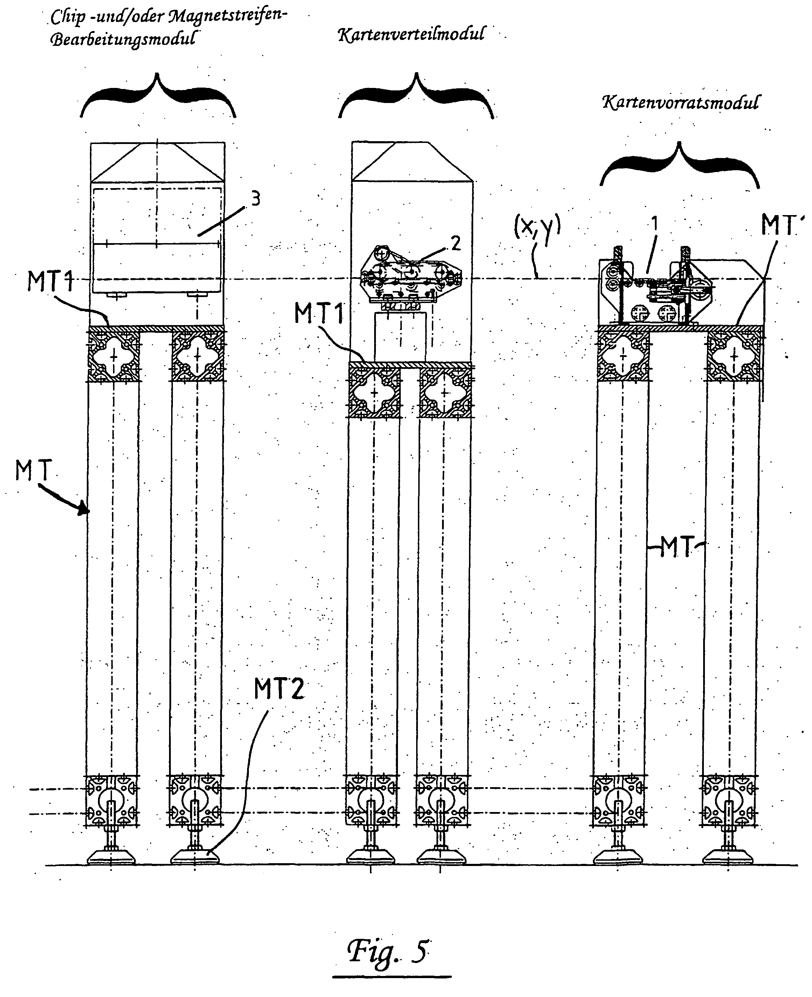

- Fig.5: eine Seitenansicht von Teilen der modular aufgebauten Anlage vor dem Zusammenbau (von rechts nach links: Kartenvorratsmodul, Kartenverteilmodul, Chip-und/oder Magnetstreifen-Bearbeitungsmodul),

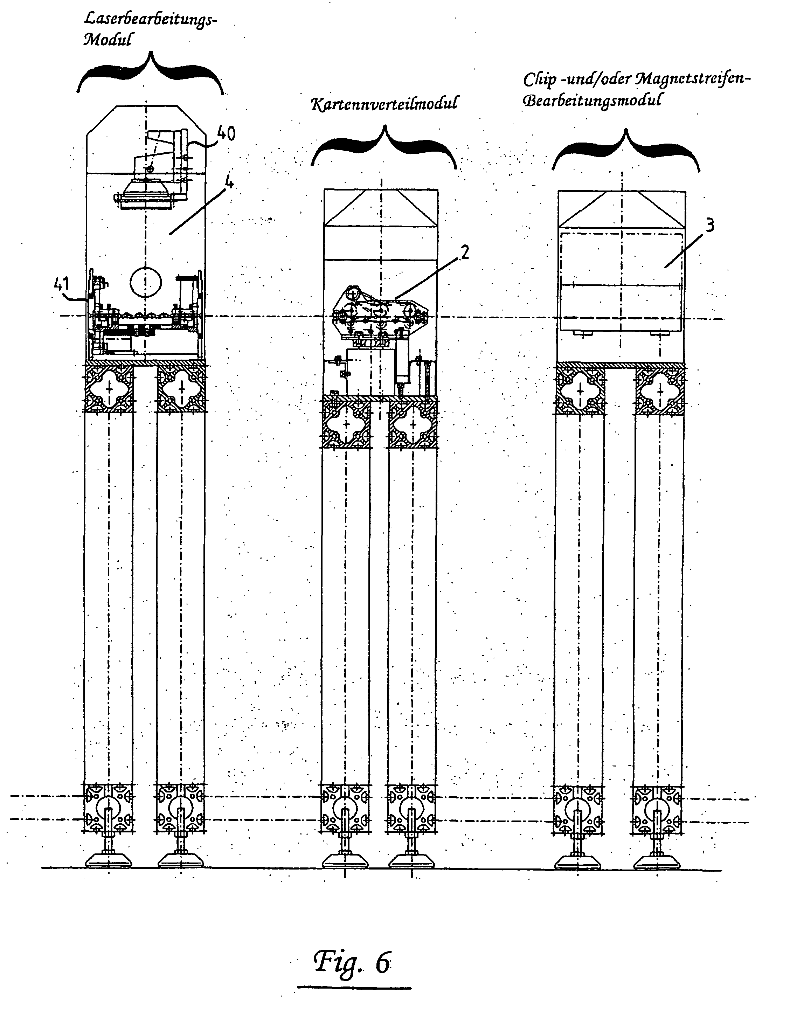

- Fig.6: eine Seitenansicht von Teilen der modular aufgebauten Anlage vor dem Zusammenbau (von rechts nach links: Chip-und/oder Magnetstreifen-Bearbeitungsmodul, Kartenverteilmodul, Kartenkörper-Bearbeitungsmodul- hier Laserstationsmodul),

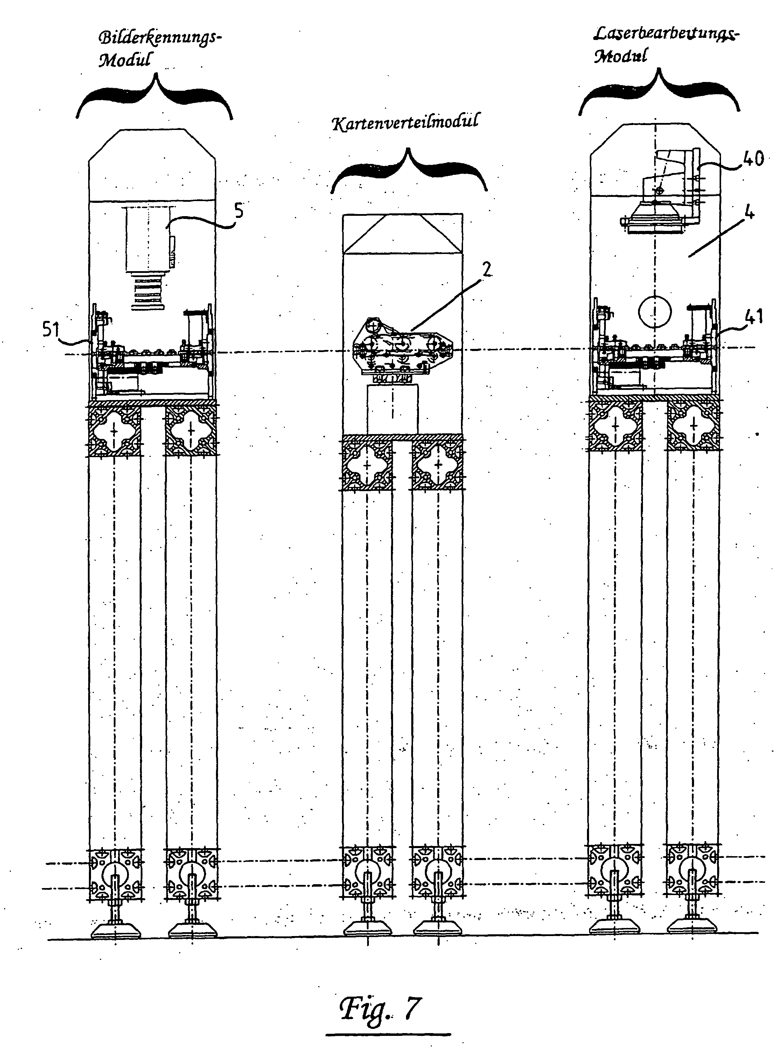

- Fig.7: eine Seitenansicht von Teilen der modular aufgebauten Anlage vor dem Zusammenbau (von rechts nach links: Kartenkörper-Bearbeitungsmodul, Kartenverteilmodul, Bilderkennungsmodul),

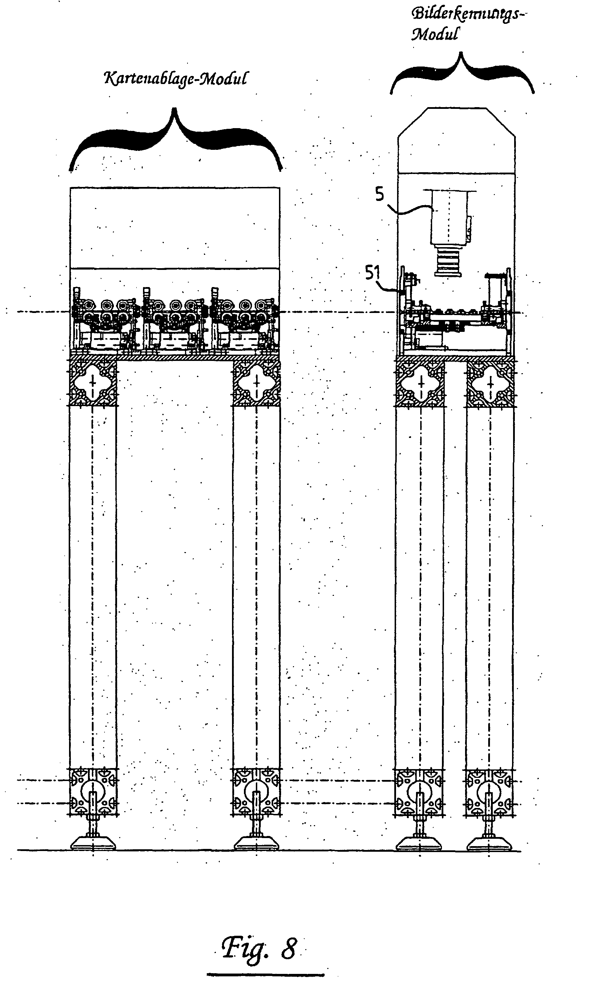

- Fig.8: eine Seitenansicht von Teilen der modular aufgebauten Anlage vor dem Zusammenbau (von rechts nach links: Bilderkennungsmodul, Kartenablagemodul mit drei Ablagemagazinen),
- Fig.9: eine schematische Darstellung der Vereinzelung einer Karte aus dem Kartenvorratsmagazin,
- Fig.10: eine schematische Darstellung der Kartenübergabe von einem Kartenvorratsmagazin zur Kartenverteilvorrichtung,
- Fig.11: eine Seitenansicht der zum Kartenvorratsmagazin gehörenden Kartenvereinzelungsvorrichtung,
- Fig. 12: eine Seitenansicht der Kartenverteilvorrichtung,
- Fig.13: eine Ansicht in Bearbeitunsablaufrichtung der auf auf einem Zahnriemen montierten Kartenverteilvorrichtung,
- Fig.14: eine schematische Seitenansicht der Kartenübergabe von einer Kartenverteilvorrichtung an eine Bearbeitungstation,
- Fig.15: eine schematische Seitenansicht der Laserbeschriftungsstation,
- Fig.16: eine Draufsicht der zur Laserstation gehörenden Kartentransport- und Positioniervorrichtung,
- Fig. 17: eine Seitenansicht der zur Laserstation gehörenden Kartentransport- and Positioniervorrichtung zur Verdeutlichung der Kartenwendeoption,
- Fig.18: eine schematische Ansicht der Bilderkennungsstation.

Die Anlage weist erfindungsgemäß eine Kartentransportebene (x,y) mit einer Bearbeitungs-Ablaufachse (y) und einer Bearbeitungs-Parallelisierungs-Achse (x) auf. Dabei sind Bearbeitunsstationen (3,4) unterschiedlichen Bearbeitungstyps beabstandet hintereinander entlang der Bearbeitungsablaufachse (y) angeordnet und mehrfach ausgeführte Bearbeitungsstationen (3,4) eines Bearbeitungstyps parallel nebeneinander jeweils entlang der Bearbeitungs-Parallelisierungsachse (x) als Bearbeitungsmodul (M3,M4) angeordnet. In Bearbeitungsrichtung vor und hinter einem Bearbeitungsmodul (M3,M4) bestehend aus zwei oder mehreren Bearbeitungsstationen (3,4) desselben Bearbeitungstyps ist jeweils mindestens eine zum Kartentransportsystem gehörende Kartenverteilvorrichtung (2) angeordnet ist, die entlang der Bearbeitungs-Parallelisierungsachse (x) verfahrbar ist, und in der Lage ist, nach dem Anfahren jeweils einer Kartenempfangs- bzw. Kartenausgabeposition eine Karte (K) von einem Kartenvorratsmagazin (1) oder einer Bearbeitungsstation (3,4) zu empfangen, aufzunehmen bzw. an eine Bearbeitungsstation (3,4) auszugeben.

Die Anlage ist erfindungsgemäß aus separaten, hintereinander entlang der Bearbeitungs-Ablaufachse (y) angeordneten, trennbar und auswechselbar miteinander verbundenen Modulen (M1,M2,M3,M4,M5) mit jeweils einem eigenen Traggestell (MT) aufgebaut; und zwar aus
- einem Kartenvorratsmodul (M1), das ein oder mehrere nebeneinander entlang der Bearbeitungs-Parallelisierungsachse (x) angeordnete Kartenvorratsmagazine (1) aufweist,
- einem ersten Kartenverteilmodul (M2) mit einer Kartenverteilvorrichtung (2), die entlang der Bearbeitungs-Parallelisierungsachse (x) verfahrbar ist, und in der Lage ist, nach dem Anfahren jeweils einer Kartenempfangs- oder Kartenausgabeposition eine Karte (K) von einem Kartenvorratsmagazin (1) und/oder einer Bearbeitungsstation (3,4) zu empfangen, aufzunehmen und an eine Bearbeitungsstation (3,4) auszugeben,
- einem Chip- und/oder Magnetstreifen-Bearbeitungsmodul (M3), des zwei oder mehrere nebeneinander entlang der Bearbeitungs-Parallelisierungsachse (x) angeordnete Chip-und/oder Magnetstreifen-Bearbeitungsstationen (3) aufweist,
- einem zweiten Kartenverteilmodul (M2) mit einer Kartenverteilvorrichtung (2), die entlang der Bearbeitungs-Parallelisierungsachse (x) verfahrbar ist, und in der Lage ist, nach dem Anfahren jeweils einer Kartenempfangs- oder Kartenausgabeposition eine Karte (K) von einer Bearbeitungsstation (3,4) zu empfangen, aufzunehmen und an eine Bearbeitungsstation (3,4) auszugeben,
- mindestens einem Kartenkörper-Bearbeitunesmodul (M4), das ein oder mehrere nebeneinander entlang der Bearbeitungs-Parallelisierungsachse (x) angeordnete Kartenkörper-Bearbeitungsstationen (4) aufweist.

Das auf den Zeichnungen dargestellte Ausführungsbeispiel der erfindungsgemäßen Anlage umfasst 10 Chip- und/oder Magnetstreifen-Bearbeitungsstationen (3), 3 Laserstationen (4) als Kartenkörper-Bearbeitungsstationen zum Aufbringen der nicht änderbaren Daten auf den Kartenkörper sowie 6 Kartenvorratsmagazine (1) mit integrierter Vorrichtung (10) zur Vereinzelung der magazinierten Karten (K). Jede Chip-und/oder Magnetstreifen-Bearbeitungsstation (3) ist in bekannter Weise dazu in der Lage, die Richtigkeit der aufgezeichneten Daten zu überprüfen. In Bearbeitungsablaufrichtung (y) hinter dem Laserbeschriftungsmodul (M4) ist zusätzlich ein Bilderkennungsmodul (M5) mit einer Bilderkennungsstation (5) zur Überprüfung der Richtigkeit und Qualität der auf den Kartenkörper aufgebrachten Daten/Informationen angeordnet. Nach erfolgter Bildauswertung wird automatisch entschieden, ob eine Karte (K) in ein Ablagemagazin (6) für korrekt bearbeitete Karten oder in ein Ausschußmagazin (6) für fehlerhafte Karten transportiert wird. In dem Ausführungsbeispiel sind jeweils drei Ablagemagazine/Ausschußmagazine (6) konstruktiv als Kartenablagemodul (M6) zusammengefaßt.

Der modulare Aufbau ermöglicht die Integration von mehreren Chip-und/oder Magnetstreifen-Bearbeitungsstationen (3) und mindestens einer Kartenkörper-Bearbeitungsstation (4) in einer Anlage bei kompakter Bauweise. Darüber hinaus kann die Anlage aufgrund ihres modularen Charakters einfach und schnell aufgebaut werden. Von besonderm Vorteil ist die Flexibilität dieser modularen Anlage bzgl. Erweiterbarkeit und Umkonfigurierbarkeit. Der Abnehmer (Kunde)/Betreiber der Anlage wird somit in die Lage versetzt, sich eine Anlage nach seinen Bedürfnissen nach dem Baukastenprinzip zusammenzustellen. Er kann dabei jeweils auf verschiedene, miteinander kombinierbare Anlagemodule (M1,M2,M3,M4,M5) zurückgreifen. So kann beispielsweise bei der erfindungsgemäßen Anlage das Laserbearbeitungsmodul (M4) gegen ein Embossiermodul (nicht dargestellt) mit wenigstens einer Hochprägestation oder gegen ein Thermosublimationsdrucker-Modul ausgetauscht werden. Für diesen Zweck wird einfach die Verbindung zwischen dem Laserbearbeitungsmodul (M4) und den beiden angrenzenden Kartenverteilmodulen (M2) gelöst, das Laserbearbeitungsmodul (M4) herausgenommen und das andere Kartenkörper-Bearbeitungsmodul eingesetzt. Es ist ebenso in einfacher Weise möglich, eine bestehende Anlage um ein oder mehrere Bearbeitungsmodule zu erweitern. So könnte beispielsweise die Anlage zwischen dem Kartenverteilmodul (M2) und dem Laserbeschriftungsmodul (M4) aufgetrennt werden und ein Bearbeitungsmodul mit einem oder mehreren Thermosublimationsdruckern und ein weiteres Kartenverteilmodul eingefügt werden. Damit wäre es z.B. möglich, vor der Laserbeschriftung farbige Photos der Karteninhaber aufzubringen. Genauso einfach kann eine erfindungsgemäße Anlage um ein Bilderkennungsmodul (M5) oder ein Ablagemodul (M6) erweitert werden.

Die Traggestelle (MT) der Anlagenmodule (M1,...,M6) sind bevorzugt aus Aluminiumprofilen gebildet, die untereinander in einfacher Weise zum Zusammenbau der Anlage verschraubbar sind. Jedes Traggestell (MT) weist dabei eine eigene Modul-Aufnahmeplattform, vorzugsweise eine Montageplatte (MT1) auf. Zum Einstellen der Kartenbearbeitungs-Transportebene der Station/en eines jeden Moduls (M1,...M6) auf die eine Kartentransportebene (x,y) der Anlage weist jedes Traggestell (MT) höhenverstellbare Füße (MT2) auf. Die Station/en (1,3,4,5,6) eines Moduls (M1,...,M6) sind dabei auf der Aufnahmeplattform (MT1) des Traggestells (MT) entfernbar und auswechselbar montiert. Dies schafft wiederum mehr Flexibilität und erleichtert Service und Wartung. Weiterhin ist es vorgesehen, daß die Station/en (1,3,4,5,6) eines Moduls (M1,..M6) auf der Aufnahmeplattform (MT1) an unterschiedlichen Positionen entlang der Bearbeitungs-Parallelisierungsachse (x) montierbar sind. Dies ist beispielsweise dadurch realisiert, daß die Aufnahmeplatte (MT1) ein Lochfeld zur Aufnahme von Befestigungsschrauben zur Montage der Stationen des Moduls an verschiedenen Positionen und/oder mit verschiedenen Abständen zueinander aufweist. Durch Wahl der entsprechenden Löcher wird dann die Station an der gewünschten Position montiert. Weiterhin ist es vorgesehen, daß die Stationen eines Moduls auf der Aufnahmeplattform (MT) entlang der Bearbeitungs-Parallelisierungsachse (x) verschiebbar gehalten sind. Mit diesen Maßnahmen kann in einfacher Weise die Zahl der Stationen in einem Modul verändert werden und die Positionen der Stationen an veränderte Anlagenkonstellationen angepaßt werden.

Nachfolgend soll die geamte Anlage im Detail zum besseren Verständnis beschreiben werden. Die 6 Kartenvorratsmagazine (1) mit jeweils ihren Vereinzelungsvorrichtungen (10) sind nebeneinander entlang der Bearbeitungs-Parallelisierungsachse (x) angeordnet. Ein Vorratsmagazin (1) kann je nach Ausführung bis zu 400 Karten aufnehmen. Der Magazinschacht ist bei größeren Magazinen vorzugsweise zumindest auf einem Teilbereich gegenüber der Vertikalen schräg oder gekrümmt verlaufend ausgebildet, so daß ein Teil der Gewichtskraft der übereinanderliegenden Karten von dem Magazinschacht aufgefangen wird und somit die jeweils zu vereinzelnde, unterste Karte (K) gewichtsmäßig entlastet wird.

Durch die Anordnung von mehreren Kartenvorratsmagazinen (1)/Vereinzelungsvorrichtungen (10) entlang der Bearbeitungs-Parallelisierungsachse (x), auf die die zu bearbeitenden Karten einer Sorte verteilt werden, lassen sich die Kartentransportwege/zeiten für die sich in Bearbeitungsablaufrichtung (y) hinter den Kartenvorratsmagazinen (1) befindliche Kartenverteilvorrichtung (2) zur Beschickung der Chip- und/oder Magnetstreifen-Bearbeitungsstationen (3) minimieren. Zur Steuerung des Verfahrweges der Kartenverteilvorrichtung (2) zu den jeweiligen Kartenempfangs- und Ausgabepositionen enthält die computergestützte Anlagensteuerung einen entsprechenden Steueralgorithmus, der die verschiedenen Wegstrecken von den einzelnen Kartenvorratsmagazine (1) zu den verschiedenen Chip-und/oder Magnetstreifen-Bearbeitungsstationen (3) berücksichtigt. Beim Starten der Kartenbearbeitung werden die Chip-und/oder Magnetstreifen-Bearbeitungsstationen (3) nacheinander mit Karten (K) aufgefüllt. Meldet eine Chip-und/oder Magnetstreifen-Bearbeitungsstation (3), daß sie mit der Bearbeitung einer Karte fertig ist und bereit ist, die nächste Karte zu empfangen, so entscheidet der Steueralgorithmus unter Berücksichtigung der momentanen Position der kartenverteilvorrichtung (2) darüber, aus welchem Kartenvorratsmagazin (1) eine Karte für die freigewordene Chip-und/oder Magnetstreifen-Bearbeitungsstation (3) zu entnehmen ist.

Darüber hinaus ist es auch möglich, daß in den Kartenvorratsmagazinen (1) jeweils verschiedene Kartensorten (z.B im 1. Magazin Bankarten der Bank A, im 2. Magazin Bankkarten der Bank B usw.) magaziniert sind. In diesem Fall werden die Karten solange immer aus einem Kartenvorratsmagazin (1) entnommen und auf die verschiednene Chip- und/oder Magnetstreifen-Bearbeitungsstationen (3) verteilt bis der zu dieser Kartensorte gehörende Auftrag abgearbeitet ist.

Die Verwendung von 6 Kartenvorratsmagazinen (1) ist nur speziell in diesem Ausführungsbeispiel so. Es sind auch erfindungsgemäße Anlagen mit einer anderen Anzahl von Kartenvorratsmagazinen oder auch nur mit einem einzigen Kartenvorratsmagazin vorgesehen, von dem dann die verschiedenen Chip-und/oder Magnetstreifen-Bearbeitungsstationen (3) über die Kartenverteilvorrichtung (2) mit Karten versorgt werden.

Die Kartenvorratsmagazine (1) mit ihren Vereinzelungsvorrichtungen (10) bilden konstruktiv ein Kartenvorratsmodul (M1), das trennbar mit der Anlage verbunden ist. Die Kartenvorratsmagazine (1) mit ihren integrierten Vereinzelungsvorrichtungen (10) sind wiederum abnehmbar und austauschbar auf der Montageplatte (MT1) für das Kartenvorratsmodul (M1) angeordnet. Dieses Kartenvorratsmodul (M1) wird als Komponente der Anlage mit dieser verbunden, indem das Kartenvorratsmodul (M1) an das erste Kartenverteilmodul (M2) - siehe weiter unten - "angedockt" wird.

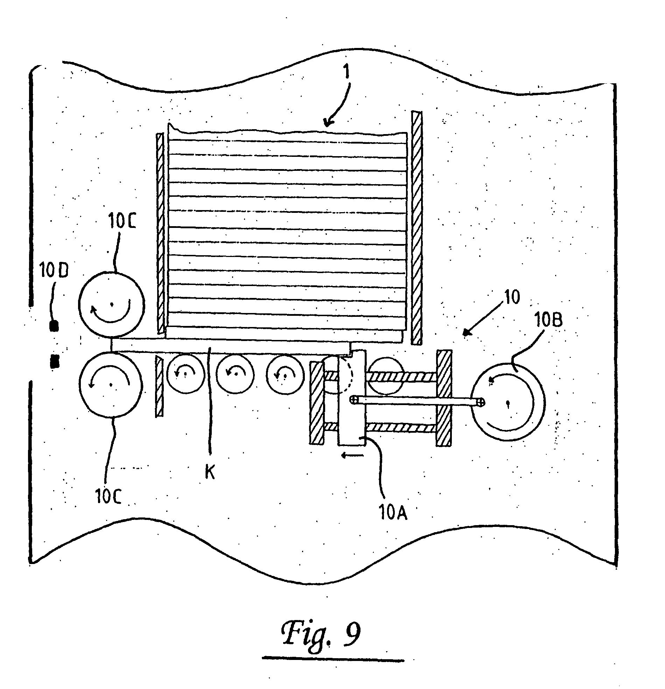

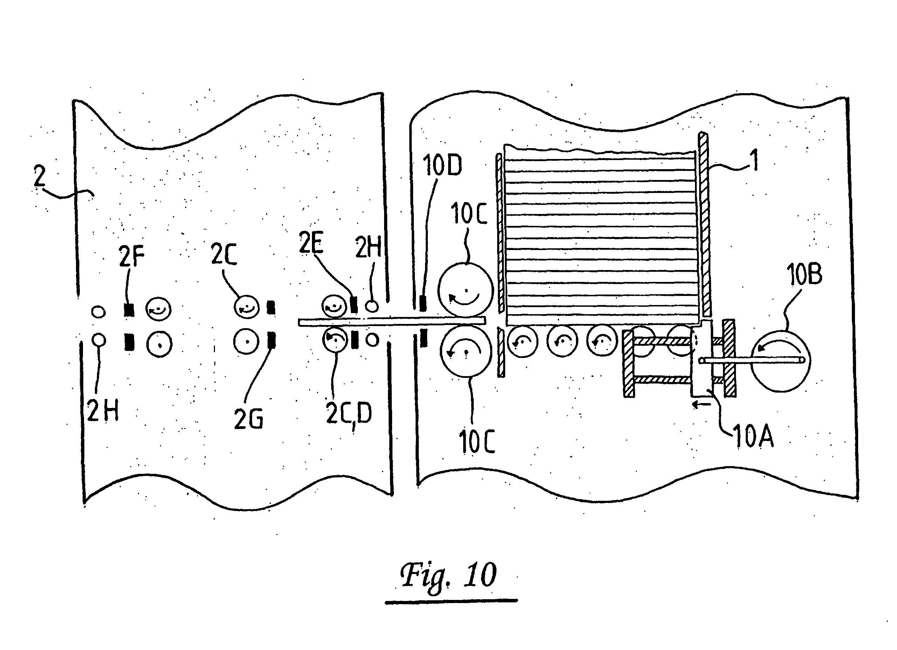

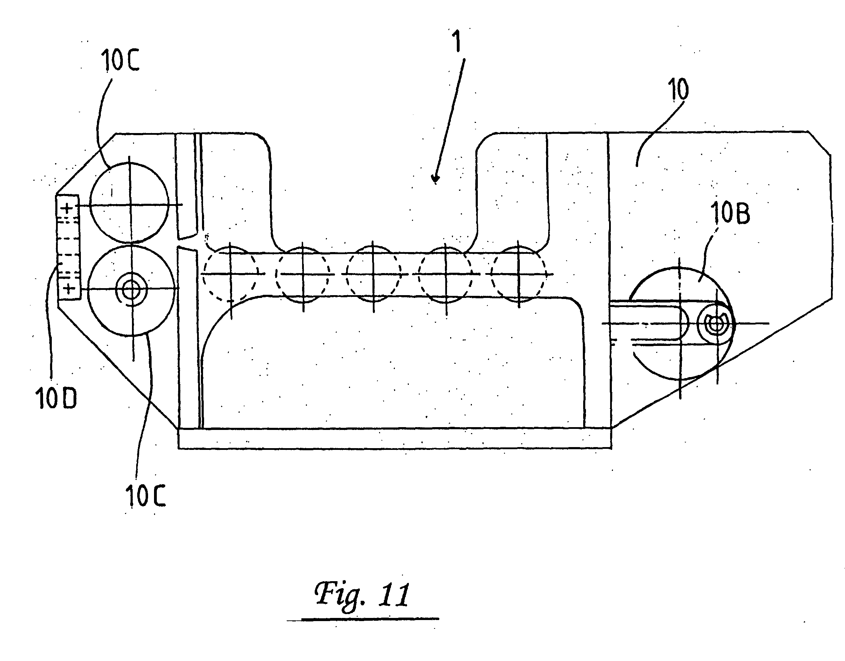

Die Vereinzelung einer Karte (K) aus dem Magazin (1) erfolgt durch die Vereinzelungsvorrichtung (10) - vgl. Fig.11 -, auf der das Kartenvorratsmagazin (1) mit seinem Magazinschacht aufgesetzt ist. Dabei wird die zu vereinzelende Karte (K) mittels eines von einem Kurbeltrieb (10B) angetriebenen Schiebers (10A) an motorisch angetriebene Auszugsrollen (10C) übergeben, die die Karte dann unter dem Kartenstapel herausziehen. Dies ist schematisch in Fig. 9 dargestellt. Die Übergabe der vereinzelten Karte (K) an eine sich in Kartenempfangsposition befindende Kartenverteilvorrichtung (2) ist in Fig.10 schematisch dargestellt. Nachdem die vereinzelte Karte (K) die Lichtschranke (10D) in der zum Kartenvorratsmagazin (1) gehörenden Vereinzelungsvorrichtung (10) passiert hat, wird der Antrieb der Auszugsrollen (10C) ausgeschaltet.

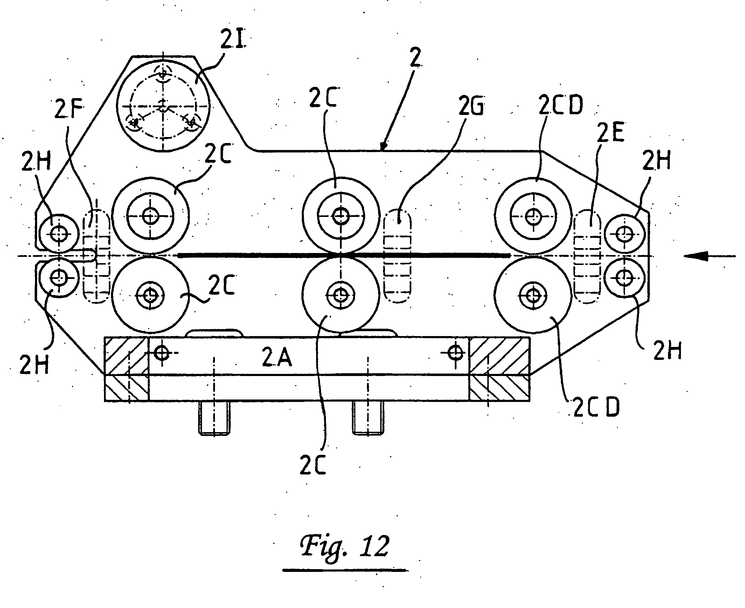

Die Kartenverteilvorrichtung (2) - vgl. Fig.12- weist einen entlang der Bearbeitungs-Parallelisierungsachse (x) motorisch verfahrbaren Schlitten (2A) auf, auf dem ein Kartenaufnahme-Gehäuse (2B) montiert ist, wobei hier Gehäuse nicht ein geschlossenes Gehäuse bedeuten muß, sondern wie in diesem Ausführungsbeispiel von zwei Gehäuseseitenteilen gebildet ist. In dem Kartenaufnahme-Gehäuse (2B) sind 3 motorisch antreibbare Transportrollen-Paare, welche jeweils aus zwei übereinander angeordneten, zwischen sich jeweils die Karten im Reibkontakt in Höhe der Kartentransport-Ebene (x,y) aufnehmenden Transportrollen (2C) bestehen. Diese Transportrollen (2C) sind auf senkrecht zur Bearbeitungs-Ablaufachse (y) angeordneten Achsen drehbar gelagert. Dabei ist jeweils eine Transportrolle (2C) eines Transportrollen-Paares motorisch antreibbar. Vorzugsweise ist die Antriebsrichtung der Transportrollen (2C) umkehrbar, so daß die Kartenverteilvorrichtung (2) in der Lage ist, in beide Richtungen Karten zu empfangen oder auszugeben. Bei der Kartenübergabe von der Vereinzelungsvorrichtung/Kartenvorratsmagazin(10,1) an die Kartenverteilvorrichtung (2) werden die Karten jeweils von den Auszugsrollen (10C) der Vereinzelungsvorrichtung (10) an die Einzugrollen (2D) der Kartenverteilvorrichtung (2) zum Weitertransport übergeben. In der Kartenempfangsposition rollen die Karten quasi angestoßen durch den Schieber (10A) der Vereinzelungsvorrichtung (10) durch bis in die Kartenverteilvorrichtung (2). Dies geht im Vgl. zu dem in der EP 0 252 921 beschriebenen Greifer wesentlich schneller und schonender für die empfindliche Kartenoberfläche.

In dem Kartenaufnahme-Gehäuse (2B) der Kartenverteilvorrichtung (2) ist mindestens ein Sensor vorgesehen, der meldet, ob eine eingezogene Karte (K) ordnungsgemäß aufgenommen bzw. ausgegeben wurde. Erst nach einer ordnungsgemäßen Sensormeldung kann die Kartenverteilvorrichtung (2) entlang der Bearbeitungs-Parallelisierungsachse (x) verfahren werden. Damit ist sichergestellt, daß die Kartenverteilvorrichtung (2) nicht verfahren wird, wenn die Karte z.B. noch teilweise in der Vereinzelungsvorrichtung (10) und erst teilweise in der Kartenverteilvorrichtung (2) steckt. In dem dargestellten Ausführungsbeispiel sind für die Kartenverteilvorrichtung (2) drei Lichtschranken (2E,2F,2G) als Sensoren vorgesehen, deren Funktion erläutert werden soll: Die karteneingangsseitig vor den Transportrollen (2D) angeordnete Lichtschranke (2E) startet unmittelbar nach Detektion einer an die Kartenverteilvorrichtung (2) übergebenen Karte (K) den Antrieb (21) für die Transportrollen (2C) für den weiteren Einzug und Transport der Karte (K). Nachdem die Karte (K) die Lichtschranke (2E) durchlaufen hat, wird eine Meldung erzeugt, die das Verfahren der Kartenverteilvorrichtung (2) entlang der Bearbeitungs-Parallelisierungsachse (x) freischaltet. Die kartenausgangsseitige Lichtschranke (2F) erzeugt eine Meldung, wenn die Karte die Lichtschranke (2F) durchlaufen hat, damit wird wiederum das Verfahren der Kartenverteilvorrichtung (2) freigeschaltet. Außerdem schaltet die kartenausgabeseitige Lichtschranke (2F) unmittelbar nach Detektion einer empfangenen Karte den Antrieb (2I) für die Transportrollen (2C) aus, wenn die Kartenverteilvorrichtung (2) noch nicht die vorgesehene Ausgabeposition erreicht hat. Die mittlere Lichtschranke (2G) erzeugt eine Meldung, wenn sich eine Karte zwischen den beiden äußeren Lichtschranken (2E,2F) befindet. Dies ist wichtig, um beim erstmaligen Starten der Anlage festzustellen, ob die Kartenverteilvorrichtung (2) frei und damit in der Lage ist, eine Karte zu empfangen. Falls vor dem erstmaligen Starten der Anlage eine der Lichtschranken (2E,2F,2G) meldet, daß noch eine Karte in der Kartenverteilvorrichtung (2) vorhanden ist (aus welchen Gründen auch immer), wird der Bediener der Anlage vorzugsweise aufgefordert, diese Karte manuell zu entnehmen. Zum Führen/Lagejustage der Karten auf Kartentransportebene (x,y) beim Empfangen oder Ausgeben weist das Kartenaufnahme-Gehäuse (2B) der Kartenverteilvorrichtung (2) karteneingangs- und ausgangseitig jeweils eine Kartenführungseinrichtung auf. In dem dargestellten Beispiel ist diese von zwei im Abstand übereinander angeordneten Führungsrollen (2H), deren Drehachsen senkrecht zur Bearbeitungs-Ablaufachse (y) verlaufen, gebildet. Der Abstand zwischen den Führungsrollen (2H) ist größer als eine und kleiner als zwei Kartendicken. Damit wird sichergestellt, daß leicht schräg zur Kartentransportebene empfangene oder auszugebende Karten wieder auf die Kartentransportebene (x,y) geführt werden. Kartenausgangsseitig weist das Kartenaufnahme-Gehäuse (2B) einen sich von der Lichtschranke (2F), zwischen den Führungsrollen (2H) nach außen hin offen erstreckenden Schlitz auf, wodurch es möglich ist, daß die Kartenverteilvorrichtung (2) bereits dann verfahren werden kann, wenn eine Karte eigentlich schon an die Chip-und/oder Magnetstreifen-Bearbeitungsstation (3) ausgegeben wurde, aber das hintere Ende der Karte sich noch zwischen den Führungsrollen (2H) befindet. Hierdurch wird unnötige Wartezeit eingespart.

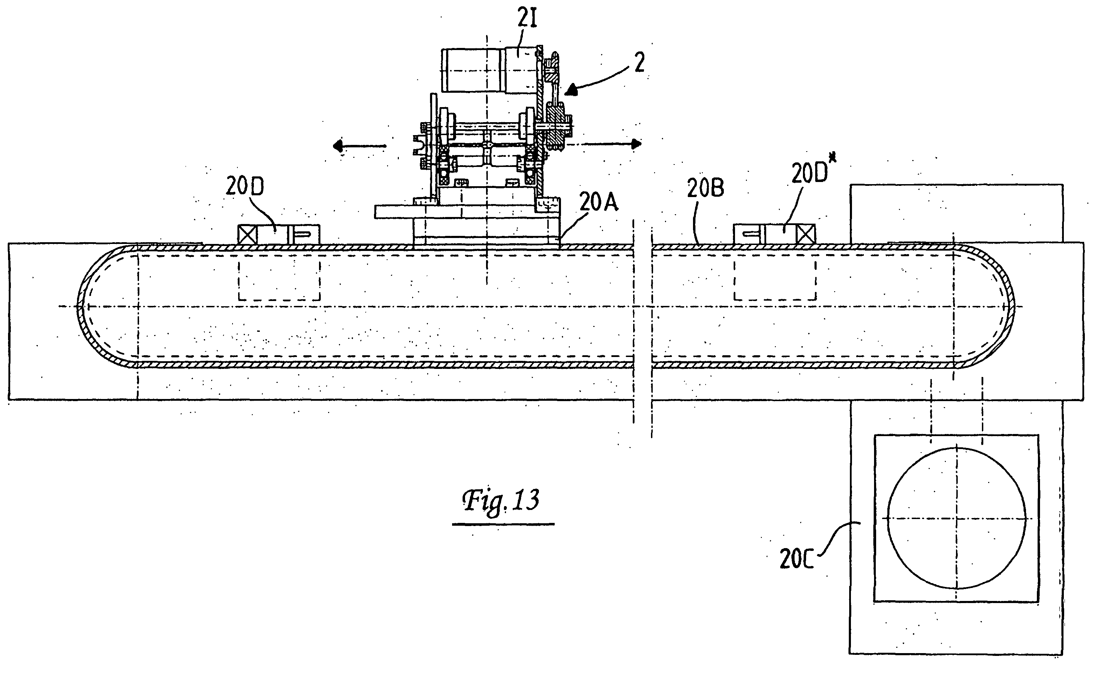

In Fig.13 ist dargestellt, wie die Kartenverteilvorrichtung (2) in dem Ausführungsbeispiel verfahren wird. Dabei wird der Schlitten (2A) der Kartenverteilvorrichtung (2) über eine Montageplatte (20A) unmittelbar auf einem umlaufenden, motorisch antreibbaren Zahnriemen (20B) montiert. Der Zahnriemen (20B) ist zwischen zwei Begrenzungspositionen verfahrbar. Für diesen Zweck sind zwei sich im Abstand der Verfahrstrecke gegenüberliegende Endschalter (20D,20D*) vorgesehen, die von dem Schlitten (2A) beim Erreichen der linken oder rechten Begrenzungsposition betätigt werden, wodurch der Antrieb (20C) für den Zahnriemen (20B) abgeschaltet wird. Zwischen diesen beiden Begrenzungspositionen fährt der Zahnriemen (20B) mit der Kartenverteilvorrichtung (2) jeweils die von der Anlagensteuerung vorbestimmte Kartenempfangs- bzw. Kartenausgabeposition an. Bei der Anlage gemäß dem Ausführungsbeispiel beträgt die max. Verfahrgeschwindigkeit für die Kartenverteilvorrichtung (2) ca. 2,5m/s; die max. Beschleunigung beträgt ca. 10m/s². Damit ist die Kartenverteilvorrichtung (2) in der Lage, den max. Verfahrweg von in dieser speziellen Ausführung der Anlage ca. 1m- in ungefähr 1s zurückzulegen. Bei einer Kartentransportgeschwindigkeit von 200-400mm/s durch die Transportrollen (2C) der Kartenverteilvorrichtung (2) ist diese in der Lage, die 85mm langen Karten in einer Zeit < 0,5s an eine Bearbeitungsstation zu übergeben. Durch die Verwendung von unterschiedlich langen Zahnriemen (20B) mit einer entsprechenden Führungschiene kann die maximal mögliche Verfahrstrecke der Kartenverteilvorrichtung (2) flexibel an unterschiedliche Parallelisierungstiefen, sprich die Zahl der mehrfach parallel nebeneinander ausgeführten Bearbeitungsstationen (3,4), die von der Kartenverteilvorrichtung (2) mit Karten bedient werden müssen, angepaßt werden. Darüber hinaus ist es auch vorgesehen, auf dem Zahnriemen zwei Kartenverteilvorrichtungen (nicht dargestellt) zu montieren, wobei eine Aufteilung der Verfahrstrecke vorgenommen wird. Die Kartenverteilvorrichtung (2) inklusive Zahnriemen (20B), Antrieb etc. bilden konstruktiv das Kartenverteilmodul (M2), das als Komponente der Anlage mit dieser trennbar und austauschbar verbunden ist. Das Kartenverteilmodul (M2) zwischen Kartenvorratsmodul (1) und Chip-und/Magnetstreifen-Bearbeitungsmodul (M3) ist baugleich zu dem Kartenverteilmodul (M2), das zwischen dem Chip-und/Magnetstreifen-Bearbeitungsmodul (M3) und dem Laserbearbeitungs-Modul (M4) angeordnet ist; und - in dem Ausführungsbeispiel - ebenso baugleich zu dem Kartenverteilmodul, das zwischen Laserbearbeitungs-Modul (M4) und dem BilderkennungsModul (M5) angeordnet ist. Das Kartenverteilmodul (2) kann in "Sandwich-Bauweise" in einfacher Weise zwischen zwei Anlage-Module (M1,M3,M4,M5) eingebaut werden.

Nachfolgend sollen noch 3 weitere (nicht dargestellte) Ausführungsformen zur Verfahrbarkeit der Kartenverteilvorrichtung beschreiben werden. In einer ersten alternativen Ausführungsform ist der Schlitten der Kartenverteilvorrichtung auf mindestens einer parallel zur Bearbeitungs-Parallelisierungsachse angeordneten Führungsschiene verfahrbar gehalten. Dabei wird der Schlitten mit einem umlaufenden, parallel zur Führungsschiene verlaufenden, motorisch zwischen zwei Begrenzugspositionen transportierbaren Riemen verbunden und ist mit diesem verfahrbar. In der zweiten Ausführungsform ist der Schlitten der Kartenverteilvorrichtung ebenfalls auf mindestens einer parallel zur Bearbeitungs-Parallelisierungsachse angeordneten Führungsschiene verfahrbar gehalten. Dabei wird der Schlitten mit zwei parallel zur Führungsschiene verlaufenden, motorisch antreibbaren Zugsseilen verbunden und von diesen verfahren. In der dritten Ausführungsform wird der Schlitten der Kartenverteilvorrichtung über eine parallel zur Bearbeitungs-Parallelisierungsachse angeordnete, motorisch antreibbare Gewindespindel verfahren.

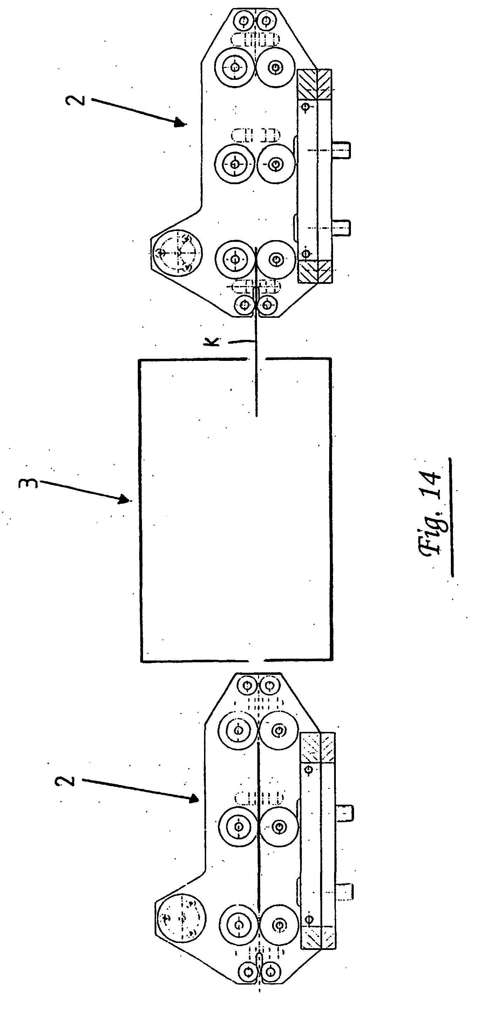

In Fig.14 ist von rechts nach links schematisch die Übergabe einer Karte (K) von der Kartenverteilvorrichtung (2) an eine als Black-Box dargestellte Chip-und/oder Magnetstreifen-Bearbeitungsstation (3) gezeigt. Hinter der Bearbeitungsstation (3) befindet sich ebenfalls eine Kartenverteilvorrichtung (2), in der sich nun die zuvor bearbeitete Karte (K') für den Weitertransport befindet. Die parallel nebeneinander angeordneten Chip-und/oder Magnetstreifen-Bearbeitungsstationen (3) bilden konstruktiv das Chip-und/oder Magnetstreifen-Bearbeitungsmodul (M3). In einer nicht dargestellten Ausführungsform der Anlage ist es vorgesehen, zwei baugleiche Chip-und/oder Magnetstreifen-BearbeitungsModule mit jeweils gleicher Anzahl von Stationen (3) in Bearbeitungs-Ablaufrichtung hintereinander ohne Zwischenschaltung eines Kartenverteilmoduls (M2) wieder als Bearbeitungsmodul (M3') zusammengefaßt anzuordnen, um den Kartendurchsatz noch weiter zu erhöhen. Der Kartentransport zwischen hintereinander angeordneten Chip-und/oder Magnetstreifen-Bearbeitungsmodulen erfolgt durch die Stationen dieser Module selbst. Nach dem Aufzeichnen der Daten in einer dieser Stationen (3) werden die Karten (K) an die sich anschließende Kartenverteilvorrichtung (2) übergeben und weiter an eine freie bzw. an die am schnellsten frei werdende der drei Laserstationen (4) transportiert

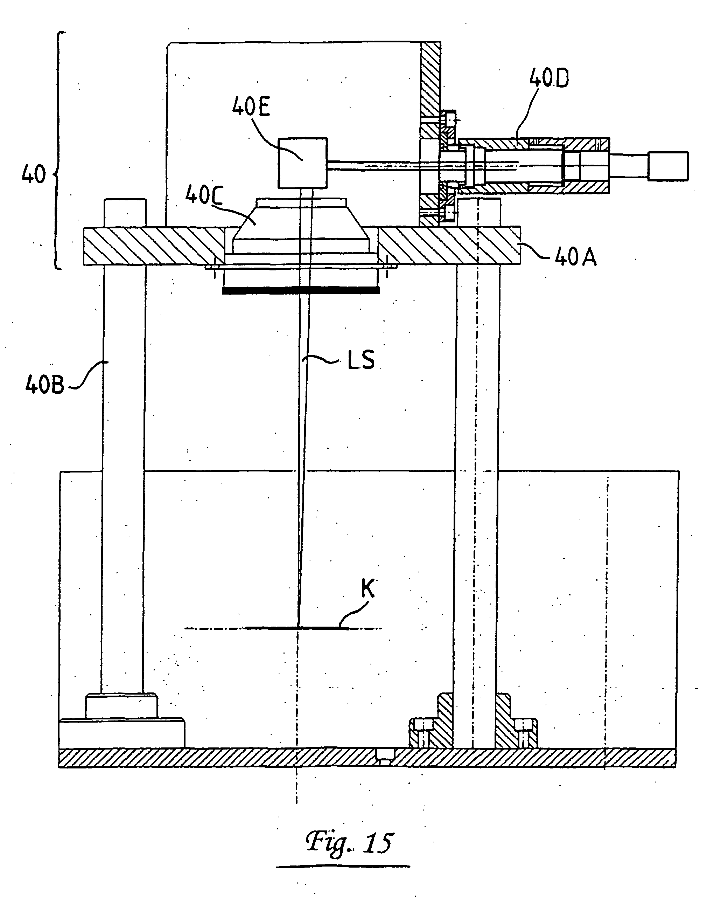

In Fig.15 ist eine Seitenansicht der Laserstation (4) gezeigt. Die Laserstrahlerzeugung erfolgt in räumlich von der Anlage getrennten Laseranlagen (in dem Ausführungsbeispiel ein Neodym-YAG-Laser, λ = 1,06µm). Die Laserstrahlung wird über eine Glasfiber (nicht dargestellt) dem ausjustagegründen gegenüber der Kartentransportebene (x,y) höhenverstellbaren Laserbeschriftungskopf (40) der Laserstation (4) zugeführt. Der Laserbeschriftungskopf (40) ist auf einer auf Halteschienen (40B) höhenverstellbar befestigten Montageplatte (40A) montiert. In der Montageplatte (40A) befindet sich ein Planfeldobjektiv (40C) zur Fokussierung der Laserstrahlung (LS) auf die Karte (K). Die Einkoppelung der Laserstrahlung (LS) über die Glasfiber geschieht durch eine am Kopf (40) angeordnete Einkoppelvorrichtung (40D) mit Einkoppellinse für den divergent aus der Glasfiber austretenden Laserstrahl. Der die Einkoppellinse nahezu parallel verlassende Laserstrahl (LS) trifft zur Kartenbeschriftung über ein Ablenkspiegel-Paar (40E) auf das Planfeldobjektiv (40C) und dann auf die Karte (K).

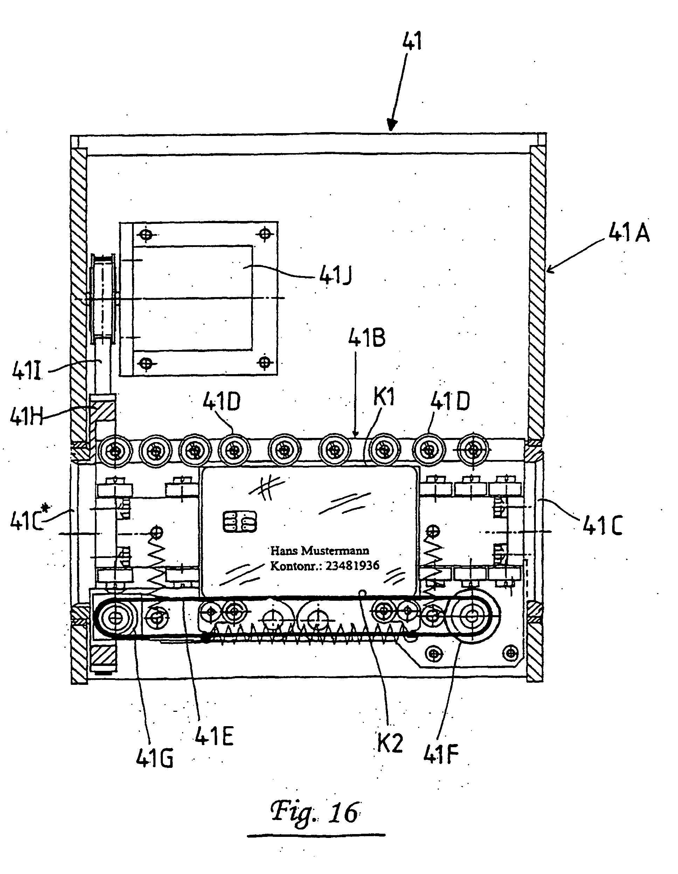

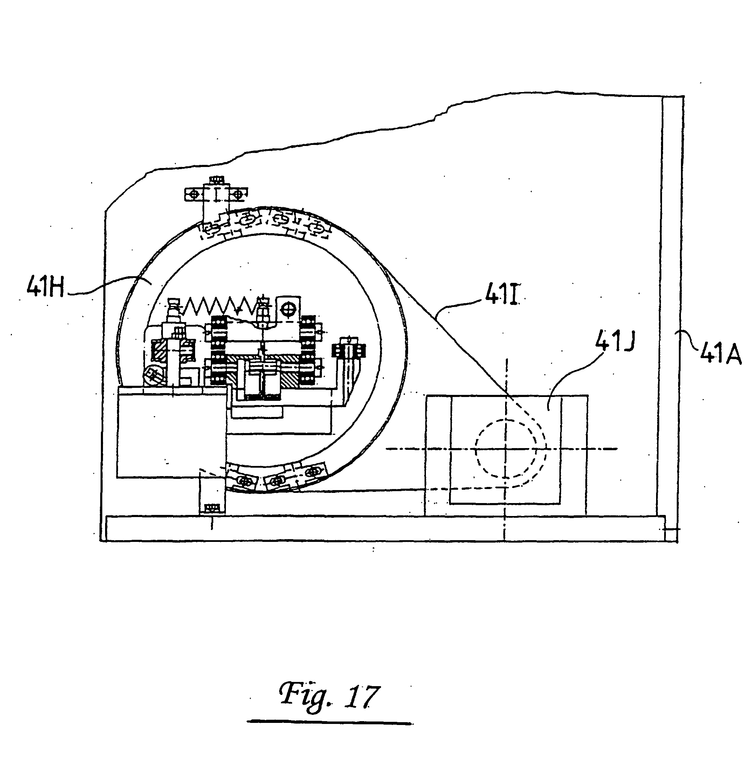

Teil der Laserstation (4) ist eine speziell hierfür entwickelte Transport und Positioniervorrichtung (41) für die Karten (K) - vgl. Fig. 16 und 17. Diese Transport- und Positioniervorrichtung (41) weist einen Montagerahmen (41B) mit einem Einführschlitz (41C) und einem diesem fluchtend gegenüberliegenden Ausgabeschlitz (41C*) auf, wobei in Kartentransportrichtung hinter dem Einführschlitz (41 C) eine Eingangszentriereinrichtung und vor dem Ausgabeschlitz (41C*) eine Ausgangszentriereinrichtung jeweils für die Zentrierung der Karten auf die Kartentransportebene (x,y) angeordnet ist. Diese Vorrichtung gestattet, die Positionierung der Karte ohne die Aufsicht auf die Kartenseiten (Vorder-wie auch Rückseite) auch nur teilweise zu verdecken. Damit ist ein vollkommen unverdecktes Beschriftungs- und Sichtfenster gegeben (siehe auch EP 863 483). Dies ist essentiell für eine uneingeschränkte Laserbeschriftung auf der gesamten Kartenfläche. Zwischen dem Einführschlitz (41C) und dem Ausgabeschlitz (41C*) und parallel zur Kartentransportrichtung ist eine Reihe von nebeneinander am Montagerahmen (41B) drehbar gelagerten Führungsrollen (41D) für die Karten angeordnet, deren Drehachsen senkrecht zur Kartentransportebene (x,y) verlaufen. Den Führungsrollen (41D) beabstandet gegenüberliegend befindet sich ein ca. über die Länge der Führungsrollen-Reihe erstreckender Transportriemen (41E). Dieser Transportriemen (41E) wird zwischen einer motorisch angetriebenen Antriebsrolle (41F) und einer Abtriebsrolle (41 G), deren Drehachsen senkrecht zur Kartentransportebene (x,y) verlaufen, gehalten. Dabei werden die Karten (K) zum Transport und zur Positionierung mit ihren Längsseiten (K1,K2) seitlich zwischen den Führungsrollen (41D) und dem Transportriemen (41E) gehalten. Dies ermöglicht es, daß die Kartenseiten vollkommen unverdeckt sind.

Die Transport- und Positioniervorrichtung (41) ermöglicht es außerdem, die Karte (K) zu wenden, wodurch ein Beschriften der Rückseite ermöglicht wird - siehe Fig. 17 - . Zu diesem Zweck ist der Montagerahmen (41B) mit dem Einführschlitz (41C), dem Ausgabeschlitz (41C*), der Führungsrollen-Reihe (41D) und dem Transportriemen (41E) in einem Gehäuse (41A) um eine Achse parallel zur Kartentransportrichtung um 180° drehbar gelagert. Dabei ist an dem Montagerahmen (41B) koaxial zur Kartentransportrichtung eine Drehscheibe (41H) montiert, die form-und/oder kraftschlüssig über einen Antriebsriemen (41I) mit einem Antriebsmotor (41J) verbunden ist. Die Transport-und Positioniervorrichtung (41) kann die Karten in der gewendeten und in der nicht gewendeten Stellung von der Kartenverteilvorrichtung (2) empfangen und an die nächste Kartenverteilvorrichtung (2) ausgeben. Die drei Laserstationen (4) bilden konstruktiv das Laserbearbeitungsmodul (M4), das als Komponente der Anlage mit dieser trennbar und austauschbar verbunden ist.

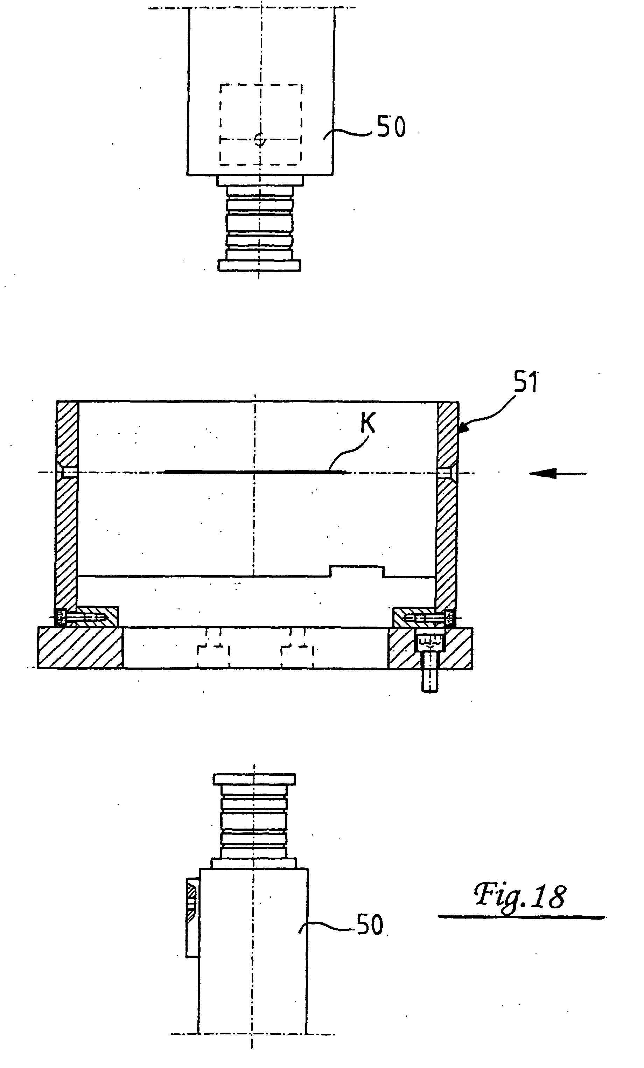

In Fig.18 ist eine in Bearbeitungs-Ablaufrichtung hinter dem Laserboarbeitungsmodul (M4) angeordnete Bilderkennungsstation (5) zur Überprüfung der Richtigkeit und Qualität der auf den Kartenkörper aufgebrachten Daten (Hans Mustermann, Kontonr.: ...) dargestellt. Diese besteht aus zwei von oben und unten auf die Karte (K) blickenden Kameras (50), vorzugsweise CCD-Kameras. Mit diesen Kameras (50) kann die Richtigkeit der auf die Karten aufgelaserten kartenspezifischen Daten durch einen Vergleich des jeweils ausgewerteten Bildes mit dem jeweils zu einer Karte gehörenden Datensatz überprüft werden. Neben der Richtigkeit kann auch die Qualität der Laserbeschriftung (Kontrast, Kantenschärfe etc.) überprüft werden. Karten mit einer falschen oder mangelhaften Laserbeschriftung werden aussortiert. Zum Transport- und zur Positionierung der von den Laserstationen (4) empfangenen Karten weist die Bilderkennungsstation (5) eine Transport-und Positioniervorrichtung (51) auf. Auch hierbei - ebenso wie in der Laserstation - ist es wichtig, daß die von den Kameras (50) zu begutachtenden Karten nicht von Teilen der Transport-und Positioniervorrichtung (51) verdeckt werden. Aus diesem Grunde wird in vorteilhafter Weise für die Transport- und Positioniervorrichtung (51) der Bilderkennungsstation (5) eine zur Transport- und Positioniervorrichtung (41) der Laserstation (4) baugleiche Vorrichtung eingesetzt. Wenn - wie in dem Ausführungsbeispiel - zwei Kameras (50), eine für die Kartenvorderseite und eine für die Kartenrückseite, eingesetzt werden, kann bei der Transport-und Positioniervorrichtung (51) auf die Wendeoption verzichtet werden. Als fehlerhaft erkannte Karten werden in einem Ausschußmagazin (6) abgelegt.

Nach der Bilderkennungsstation (5) werden.die Karten in eines der Ablagemagazine (6) abgelegt. Welche der Ablagemagazine (6) für die "Gut-Karten" und welche für die "Schlecht-Karten" verwendet werden, kann von dem Bediener der Anlage über die Anlagensteuerung flexibel festgelegt werden.

An diese Stelle soll noch auf einen weiteren Vorteil der erfindungsgemäßen Anlage hingewiesen werden. Bei der Bearbeitung ("Personalisierung") von Karten mit dieser Anlage wird gewährleistet, daß die Reihenfolge der fertigen Katen in dem /den "Gut-Karten"-Ablagemagazinen der Reihenfolge der in die Anlage eingespielten Datensätze (z.B: fortlaufende Kartennummern) entspricht, auch wenn- was aus den verschiedensten Gründen niemals auszuschließen ist - das Aufbringen der Daten in der Chip-und/oder Magnetstreifen-Bearbeitungsstation (3) oder der Laserstation (4) fehlerhaft oder unzureichend war. Das Einhalten der richtigen Kartenreihenfolge ist unbedingt notwendig, wenn nachfolgende, automatisierte Verarbeitungsschritte (z.B. in Versandanlagen für die Karten) dieses voraussetzen. Wie vorstehend bereits erwähnt wird in den Chip-und/oder Magnetstreifen-Bearbeitungsstationen (3) unmittelbar überprüft, ob die Daten korrekt auf den Chip bzw. auf den Magnetstreifen aufgezeichnet wurden. Ist z.B. wegen eines fehlerhaften Chips oder Magnetstreifen ein Aufzeichnen der Daten auf eine Karte nicht möglich, so werden alsdann nur noch die Datensätze/Karten, die in der Reihenfolge zwischen der zuletzt abgelegten "Gut-Karte" und der "Schlecht-Karte" liegen, abgearbeitet. Aus dem Kartenvorratsmagazin (1) wird eine jungfräuliche Karte entnommen und auf diese der karten-/benutzerspezifische Datensatz der "Schlecht-Karte" aufgebracht. Danach wird wieder die normale Bearbeitung durchgeführt. Dasselbe gilt auch für Fehler bei der Laserbeschriftung, die in der Bilderkennungsstation (5) erkannt werden.

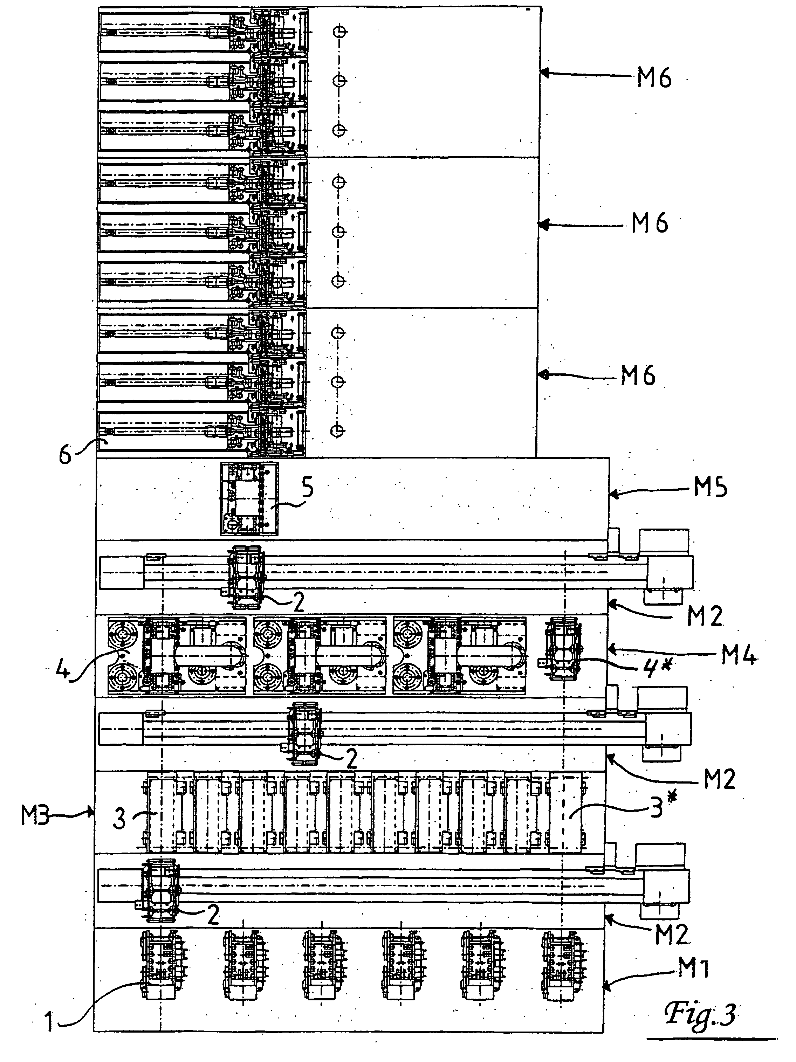

Die "Schlecht-Karten" werden in einem Ausschußmagazin (6) abgelegt. Um in dem Fall von "Schlecht-Karten" die Bearbeitungsstationen (3,4) nicht mit diesen "Schlecht-Karten" zu "verstopfen", ist dem Chip-und/oder Magnetstreifen-Bearbeitungsmodul (M3) und dem Laserbeschriftungsmodul (M4) jeweils eine Park-und/oder Bypass-Station (3*,4*) - vgl. Fig.3- zugeordnet. Wenn z.B. in einer Chip-und/oder Magnetstreifen-Bearbeitungsstation (3) festgestellt wird, daß der Chip einer Karte nicht in Ordnung ist und somit auf diese Karte keine Daten aufgezeichnet werden können, dann muß diese Karte ins Ausschußmagazin (6) befördert werden. Wenn nun alle sich an das Chip-und/oder Magnetstreifen-Bearbeitungsmodul (M3) anschließenden Laserbeschriftungsstationen (4) mit zu beschriftenden Karten besetzt sind, so wird die "Schlecht-Karte" über die Bypass-Station (4*) von den Kartenverteilvorrichtungen (2) an den Laserbeschriftungsstationen (4) vorbei ins Ausschußmagazin (6) befördert; ggfs. wird die "Schlecht-Karte" in der Bypass-Station (4*) zwischengeparkt. Für den Fall, daß die Park-/Bypass-Station (4*) schon mit einer "Schlecht-Karte" blockiert ist, kann die Parkstation (3*) genutzt werden.

Anstelle von Kartenvorratsmodulen (M6) kann die Anlage auch eine Kuvertiermaschiene zur lösbaren Fixierung/Verpackung der bearbeiteten Karten auf/in einem Träger aufweisen; oder aber die Anlage übergibt die fertigen Karten an eine solche Maschine, wobei "Schlecht-Karten" über eine Weiche ausgesondert werden.

Zusätzlich oder anstelle der Laserstation (4) kann die Anlage als Kartenkörper-Bearbeitungsstation eine Hochprägestation (Embossierstation), einen Thermotransferdrucker, einen Thermosublimationsdrucker für Farbdrucke oder einen Tintenstrahldrucker aufweisen. Je nach Bearbeitungszeit dieser Stationen im Verhältnis zu den anderen Bearbeitungsstationen sind diese entlang der Bearbeitungs-Parallelisierungsachse (x) mehrfach ausgeführt.

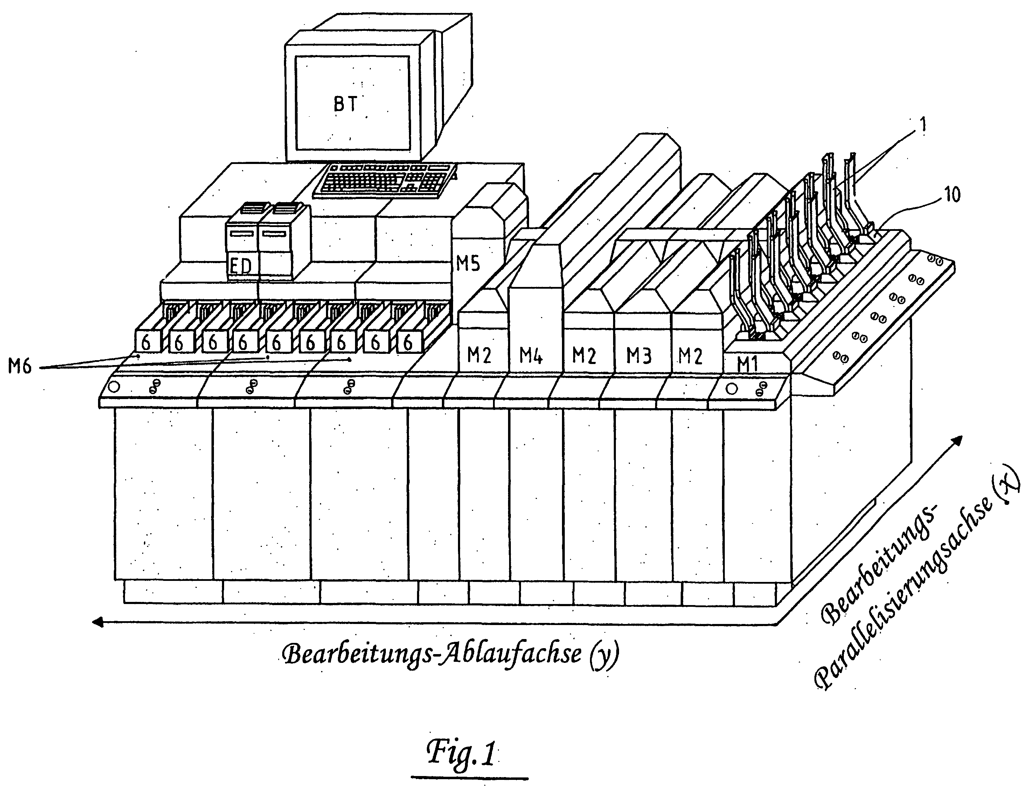

In Fig.1 ist noch das Bedienterminal (BT,Monitor) der Anlagensteuerung für den Operator dargestellt sowie zwei Etiketten-Drucker (ED) zum Drucken von Losnummern-Etiketten, die auf jeweils auf die Magazine mit den fertig bearbeiteten Karten geklebt werden.

## Patentansprüche

1. Anlage zur Bearbeitung von Chip- und/oder Magnetstreifenkarten (K) bestehend aus den folgenden Komponenten:
- mindestens einem Kartenvorratsmagazin (1) zur Aufnahme von zu bearbeitenden Karten,
- zwei oder mehreren Chip-und/oder Magnetstreifen-Bearbeitungsstationen (3) zum Aufbringen von Daten/Informationen auf den Chip und/oder auf den Magnetstreifen der Karten
- mindestens einer Kartenkörper-Bearbeitungsstation (4) zum Aufbringen von nicht änderbaren Daten/Informationen auf den Kartenkörper,
- einem Kartentransportsystem zum Transport der Karten von dem oder den Kartenvorratsmagazinen (1) hin zu den Chip-und/oder Magnetstreifen-Bearbeitungsstationen (3) und anschließend hin zu der oder den Kartenkörper-Bearbeitungsstationen (4) und von diesen wieder weiter
**dadurch gekennzeichnet, daß**
- die Anlage eine Kartentransportebene (x,y) mit einer Bearbeitungsablauf-Achse (y) und einer senkrecht dazu verlaufenden Bearbeitungs-Parallelisierungsachse (x) aufweist, wobei Bearbeitungsstationen (3,4) unterschiedlichen Bearbeitungstyps beabstandet hintereinander entlang der Bearbeitungs-Ablaufachse (y) angeordnet sind, und mehrfach ausgeführte Bearbeitungsstationen (3,4) eines Bearbeitungstyps nebeneinander entlang der Bearbeitungs-Parallelisierungsachse (x) als Bearbeitungsmodul (M3,M4) angeordnet sind,
- die Anlage aus separaten, hintereinander entlang der Bearbeitungs-Ablaufachse (y) angeordneten, trennbar und auswechelbar miteinander verbundenen Modulen (M1,M2,M3,M4,M5) mit jeweils einem eigenen Traggestell (MT) aufgebaut ist, und zwar
- einem Kartenvorratsmodul (M1), das ein oder mehrere nebeneinander entlang der Bearbeitungs-Parallelisierungsachse (x) angeordnete Kartenvorratsmagazine (1) aufweist,
- einem ersten Kartenverteilmodul (M2) mit einer Kartenverteilvorrichtung (2); die entlang der Bearbeitungs-Parallelisierungsachse (x) verfahrbar ist, und in der Lage ist, nach dem Anfahren jeweils einer Kartenempfangs- oder Kartenausgabeposition eine Karte (K) von einem Kartenvorratsmagazin (1) und/oder einer Bearbeitungsstation (3,4) zu empfangen, aufzunehmen und an eine Bearbeitungsstation (3,4) auszugeben,
- einem Chip- und/oder Magnetstreifen-Bearbeitungsmodul (M3), das zwei oder mehr nebeneinander entlang der Bearbeitungs-Parallelisierungsachse (x) angeordnete Chip-und/oder Magnetstreifen-Bearbeitungsstationen (3) aufweist,
- einem zweiten Kartenverteilmodul (M2) mit einer Kartenverteilvorrichtung (2), die entlang der Bearbeitungs-Parallelisierungsachse (x) verfahrbar ist, und in der Lage ist, nach dem Anfahren jeweils einer Kartenempfangs- oder Kartenausgabeposition eine Karte (K) von einer Bearbeitungsstation (3,4) zu empfangen, aufzunehmen und an eine Bearbeitungsstation (3,4) auszugeben,
- mindestens einem Kartenkörper-Bearbeitungsmodul (M4), das ein oder mehrere nebeneinander entlang der Bearbeitungs-Parallelisierungsachse (x) angeordnete Kartenkörper-Bearbeitungsstationen (4) aufweist.

2. Anlage nach Anspruch 1,
**dadurch gekennzeichnet, daß**
die Anlage in Bearbeitungs-Ablaufrichtung (y) hinter dem letzten Kartenköper-Bearbeitungsmodul (M4) ein Bilderkennungsmodul (M5) mit mindestens einer Bilderkennungsstation (5) zur Überprüfung der Richtigkeit und Qualität der auf den Kartenkörper aufgebrachten Daten aufweist.

3. Anlage nach einem der vorstehenden Ansprüche,
**dadurch gekennzeichnet, daß**
die Anlage in Bearbeitungs-Ablaufrichtung (y) hinter dem Bilderkennungsmodul (M5) mindestens ein Kartenablagemodul (M6) mit wenigstens einem Ablagemagazin (6) und einem Ausschußmagazin (6) aufweist.

4. Anlage nach einem der vorstehenden Ansprüche,
**dadurch gekennzeichnet, daß**
jedes Traggestell (MT) eine Modul-Aufnahmeplattform aufweist.

5. Anlage nach einem der vorstehenden Ansprüche,
**dadurch gekennzeichnet, daß**
die Traggestelle (MT) der Anlagenmodule (M1,...,M6) von Aluminiumprofilen gebildet sind, wobei die Aluminium-Traggestelle (MT1) der einzelnen Module miteinander verschraubbar sind.

6. Anlage nach einem der vorstehenden Ansprüche,
**dadurch gekennzeichnet, daß**
jedes Traggestell (MT) höhenverstellbare Füße (MT2) aufweist, um die Kartenbearbeitungs/Transport-Ebenen der Stationen (1,2,3,4,5,6) eines jeden Moduls (M1,...,M6) auf die Kartentransportebene (x,y) der Anlage einzustellen.

7. Anlage nach einem der vorstehenden Ansprüche,
**dadurch gekennzeichnet, daß**
die Stationen (1,2,3,4,5,6) eines Moduls (M1,...,M6) auf der Aufnahmeplattform (MT1) entfernbar und auswechselbar montiert sind.

8. Anlage nach einem der vorstehenden Ansprüche,
**dadurch gekennzeichnet, daß**
die Station/en (1,...,6) eines Moduls (M1,...,M6) auf der Aufnahmeplattform (MT) an unterschiedlichen Positionen entlang der Bearbeitungs-Parallelisierungsachse (x) montierbar sind.

9. Anlage nach einem der vorstehenden Ansprüche,
**dadurch gekennzeichnet, daß**
die Aufnahmeplatte (MT) eines Moduls (M1,...,M6) ein Befestigungslochfeld zur Aufnahme von Befestigungsschrauben zur Montage der/die Station/en (1,2,3,4,5,6) des Moduls an verschiedenen Positionen und/oder mit verschiedenen Abständen zueinander aufweist.

10. Anlage nach einem der Ansprüche 1 bis 8,
**dadurch gekennzeichnet, daß**
die Station/en (1,...,6) eines Moduls auf der Aufnahmeplattform (MT) verschiebbar gehalten sind.

11. Anlage nach einem der vorstehenden Ansprüche,
**dadurch gekennzeichnet, daß**
die Kartenverteilvorrichtung (2) einen entlang der Bearbeitungs-Parallelisierungsachse (x) stufenlos oder schrittweise motorisch verfahrbaren Schlitten (2A) aufweist, auf dem ein Kartenaufnahme-Gehäuse (2B) montiert ist, wobei in dem Kartenaufnahme-Gehäuse (2B) für den Karteneinzug und die Kartenausgabe motorisch antreibbare Transportrollen (2C) auf senkrecht zur Bearbeitungs-Ablaufachse (y) angeordneten Achsen drehbar gelagert sind.

12. Anlage nach Anspruch 11,
**dadurch gekennzeichnet, daß**
in dem Kartenaufnahme-Gehäuse (2B) mindestens 3 Paare von jeweils zwei übereinander angeordneten, zwischen sich jeweils die Karten (K) im Reibkontakt auf Kartentransport-Ebene (x,y) aufnehmenden Transportrollen (2C) vorgesehen sind, wobei jeweils eine Transportrolle (2C) eines Transportrollen-Paares motorisch antreibbar ist.

13. Anlage nach einem der Ansprüche 11 oder 12,
**dadurch gekennzeichnet, daß**
die Antriebsrichtung der Transportrollen (2C) umkehrbar ist.

14. Anlage nach einem der Ansprüche 11 bis 13,
**dadurch gekennzeichnet, daß**
das Kartenaufnahme-Gehäuse (2B) der Kartenverteilvorrichtung (2) mindestens einen Sensor aufweist, der meldet, ob eine eingezogene Karte (K) ordnungsgemäß aufgenommen bzw. ordnungsgemäß ausgegeben wurde, und erst nach einer ordnungsgemäßen Sensormeldung die Kartenverteilvorrichtung (2) entlang der Bearbeitungs-Parallelisierungsachse (x) verfahrbar ist.

15. Anlage nach Anspruch 14,
**dadurch gekennzeichnet, daß**
karteneingangsseitig vor den Transportrollen (2C) und kartenausgangsseitig hinter den Transportrollen (2C) jeweils eine Lichtschranke (2E,2F) vorgesehen ist, wobei
- unmittelbar nach der Detektion einer an die Kartenverteilvorrichtung (2) übergebenen Karte durch die karteneingangsseitige Lichtschranke (2E) der Antrieb (2I) für die Tranportrollen (2C) gestartet wird, und nachdem die Karte (K) diese Lichtschranke (2E) durchlaufen hat, eine Meldung erzeugt wird, die das Verfahren der Kartenverteilvorrichtung (2) entlang der Bearbeitungs-Parallelisierungsachse (x) freischaltet,
- nachdem die Karte (2) die ausgangsseitige Lichtschranke (2F) durchlaufen hat, eine Meldung erzeugt wird, die das Verfahren der Kartenverteilvorrichtung (2) entlang der Bearbeitungs- Parallelisierungsachse (x) freischaltet.

16. Anlage nach Anspruch 15,
**dadurch gekennzeichnet, daß**
die kartenausgangsseitige Lichtschranke (2F) unmittelbar nach Detektion einer empfangenen Karte (K) den Antrieb (2I) für die Transportrollen (2C) ausschaltet, wenn die Kartenverteilvorrichtung (2) die vorgesehene Ausgabeposition noch nicht erreicht hat.

17. Anlage nach einem der Ansprüche 11 bis 16,
**dadurch gekennzeichnet, daß**
das Kartenaufnahme-Gehäuse (2B) karteneingangs- und kartenausgangsseitig jeweils eine Karten-Führungseinrichtung (2H) zum Führen der Karten auf Kartentransportebene aufweist.

18. Anlage nach Anspruch 17,
**dadurch gekennzeichnet, daß**
die Karten-Führungseinrichtung von zwei in einem Abstand übereinander angeordneten Führungsrollen (2H), deren Drehachsen parallel zur Bearbeitungs-Parallelisierungsachse (x) verlaufen, gebildet ist, wobei der Abstand zwischen den Führungsrollen (2H) größer als eine und kleiner als zwei Kartendicken ist.

19. Anlage nach einem der Ansprüche 11 bis 18,
**dadurch gekennzeichnet, daß**
der Schlitten (2A) der Kartenverteilvorrichtung (2) über eine Montageplatte (20A) unmittelbar auf einem umlaufenden, motorisch antreibbaren und zwischen zwei Begrenzungspositionen transportierbaren Riemen (20B) montiert ist.

20. Anlage nach einem der Ansprüche 11 bis 19
**dadurch gekennzeichnet, daß**
der Schlitten der Kartenverteilvorrichtung auf mindestens einer parallel zur Bearbeitungs-Parallelierungsachse (x) angeordneten Führungsschiene verfahrbar gehalten ist, wobei der Schlitten mit einem umlaufenden, parallel zur Führungsschiene verlaufen, motorisch zwischen zwei Begrenzungspositionen transportierbaren Riemen verbunden und mit diesem verfahrbar ist.

21. Anlage nach einem der Ansprüche 11 bis 19
**dadurch gekennzeichnet, daß**
der Schlitten der Kartenverteilvorrichtung auf mindestens einer parallel zur Bearbeitungs-Parallelisierungsachse (x) angeordneten Führungsschiene verfahrbar gehalten ist, wobei der Schlitten mit zwei parallel zur Führungsschiene verlaufenden, motorisch antreibbaren Zugseilen verbunden und von diesen verfahrbar ist.

22. Anlage nach Anspruch 11,
**dadurch gekennzeichnet, daß**
der Schlitten der Kartenverteilvorrichtung über eine parallel zur Bearbeitungs-Parallelisierungsachse (x) angeordnete, motorisch antreibbare Gewindespindel verfahrbar ist.

23. Anlage nach einem der vorstehenden Ansprüche,
**dadurch gekennzeichnet, daß**
die Anlage mindestens eine Laserbeschriftungsstation (4) als Kartenkörper-Bearbeitungsstation aufweist.

24. Anlage nach einem der vorstehenden Ansprüche,
**dadurch gekennzeichnet, daß**
die Anlage drei Laserbeschriftungsstationen (4) und zehn Chip- und/oder Magnetstreifen-Bearbeitungsstationen (3) aufweist.

25. Anlage nach einem der vorstehenden Ansprüche,
**dadurch gekennzeichnet, daß**
die Anlage mindestens eine Hochprägestation als Kartenkörper-Bearbeitungsstation aufweist.

26. Anlage nach einem der vorstehenden Ansprüche,
**dadurch gekennzeichnet, daß**
die Anlage mindestens einen Thermotransferdrucker als Kartenkörper-Bearbeitungsstation aufweist.

27. Anlage nach einem der vorstehenden Ansprüche,
**dadurch gekennzeichnet, daß**
die Anlage mindestens einen Thermosublimationsdrucker als Kartenkörper-Bearbeitungsstation aufweist.

28. Anlage nach einem der vorstehenden Ansprüche,
**dadurch gekennzeichnet, daß**
die Anlage mindestens einen Tintenstrahldrucker als Kartenkörper-Bearbeitungsstation aufweist.

29. Anlage nach einem der vorstehenden Ansprüche,
**dadurch gekennzeichnet, daß**
mindestens ein Kartenvorratsmagazin (6), eine Chip-und/oder Magnetstreifen-Bearbeitungsstation (3) und eine Laserstation (4) fluchtend hintereinander angeordnet sind.

30. Anlage nach einem der vorstehenden Ansprüche,
**dadurch gekennzeichnet, daß**
baugleiche Bearbeitungsmodule (M3,M4) eines Bearbeitungstyps mit jeweils gleicher Anzahl von mehrfach ausgeführten Bearbeitungsstationen (3,4) in Bearbeitungs-Ablaufrichtung (y) hintereinander ohne Zwischenschaltung eines Kartenverteilmoduls (M2) wiederum als Bearbeitungsmodul (M3',M4') zusammengefaßt sind.

31. Anlage nach einem der vorstehenden Ansprüche,
**dadurch gekennzeichnet, daß**
jedes Bearbeitungsmodul (M3,M4) eine Park-und/oder Bypass-Station (3*,4*) für Karten aufweist.

## Claims

1. System for processing chip and/or magnetic strip cards (K) comprising the following components:
- at least one card-stock magazine (1) for the reception of cards to be processed,
- two or more chip- and/or magnetic strip-processing stations (3) for applying data/information to the chip (semiconductor component) and/or to the magnetic strip of the cards,
- at least one card body-processing station (4) for applying non-modifiable data/information to the card body,
- a card-transport system for transporting the cards from the card-stock magazine(s) (1) to the chip- and/or magnetic strip-processing stations (3) and then to the card body-processing station(s) (4) and then onward from these,
**characterized in that**
- the system has a card-transport plane (x,y) with a processing-sequence axis (y) and a processing-parallelization axis (x) running perpendicular to it, processing stations (3,4) of different processing types being arranged at a distance behind one another along the processing-sequence axis (y), and repeated processing stations (3,4) of a processing type being arranged alongside one another along the processing-parallelization axis (x) as processing modules (M3,M4),
- the system is constructed from separate modules (M1,M2,M3,M4,M5) connected to one another, arranged separable and interchangeable behind one another along the processing-sequence axis (y), each with its own supporting structure (MT), namely
- a card-stock module (M1) which has one or more card-stock magazines (1) arranged alongside one another along the processing-parallelization axis (x),
- a first card-distribution module (M2) with a card-distribution device (2) which is movable along the processing-parallelization axis (x) and, after each arrival at a card-receiving or card-issuing position, is able to receive a card (K) from a card-stock magazine (1) and/or a processing station (3,4), hold it and issue it to a processing station (3,4)
- a chip- and/or magnetic strip-processing module (M3) which has two or more chip- and/or magnetic strip-processing stations (3) arranged alongside one another along the processing-parallelization axis (x),
- a second card-distribution module (M2) with a card-distribution device (2) which is movable along the processing-parallelization axis (x) and after arrival is able to receive a card (K) from a processing station (3,4), hold it and issue it to a processing station (3,4),
- at least one card body-processing module (M4) which has one or more card body-processing stations (4) arranged alongside one another along the processing-parallelization axis (x).

2. System according to claim 1,
**characterized in that**
in processing-sequence direction (y) behind the last card body-processing module (M4) the system has an image-recognition module (M5) with at least one image-recognition station (5) for checking the correctness and quality of the data applied to the card body.

3. System according to one of the previous claims,
**characterized in that**
in processing-sequence direction (y) behind the image-recognition module (M5) the system has at least one card-filing module (M6) with at least one filing magazine (6) and one rejects magazine (6).

4. System according to one of the previous claims,
**characterized in that**
each supporting structure (MT) has a module-reception platform.

5. System according to one of the previous claims,
**characterized in that**
the supporting structures (MT) of the system modules (M1,...,M6) are formed from aluminium profiles, the aluminium supporting structures (MT1) of the individual modules being screwable to one another.

6. System according to one of the previous claims,
**characterized in that**
each supporting structure (MT) has height-adjustable feet (MT2), in order to set the card-processing/transport planes of the station(s) (1,2,3,4,5,6) of each module (M1,...,M6) to the card-transport plane (x,y) of the system.

7. System according to one of the previous claims,
**characterized in that**
the station(s) (1,2,3,4,5,6) of a module (M1,...,M6) are mounted removable and exchangeable on the reception platform (MT1).

8. System according to one of the previous claims,
**characterized in that**
the station(s) (1,...,6) of a module (M1,...,M6) can be mounted on the reception platform (MT) at various positions along the processing-parallelization axis (x).

9. System according to one of the previous claims,
**characterized in that**
the reception plate (MT) of a module (M1,...,M6) has a mounting-hole field for the reception of fastening screws for the mounting of the station(s) (1,2,3,4,5,6) of the module at various positions and/or at various distances from one another.

10. System according to one of claims 1 to 8,
**characterized in that**
the station(s) (1,...,6) of a module are held displaceable on the reception platform (MT).

11. System according to one of the previous claims,
**characterized in that**
the card-distribution device (2) has a carriage (2A), movable by motor continuously or stepwise along the processing-paraltelization axis (x), on which is mounted a card-reception housing (2B), motor-drivable feed rolls (2C) being housed rotatable on axes arranged perpendicular to the processing-sequence axis (y) in the card-reception housing (2B) for the drawing-in and issuing of cards.

12. System according to claim 11,
**characterized in that**
at least 3 pairs of feed rolls (2C), each arranged one above the other, are provided in the card-reception housing (2B), between each of which are provided the feed rolls (2) receiving cards (K) in friction contact on card-transport plane (x,y), each feed roll (2C) of a feed-roll pair being motor-drivable.

13. System according to one of claims 11 or 12,
**characterized in that**
the drive direction of the feed rolls (2C) is reversible.

14. System according to one of claims 11 to 13,
**characterized in that**
the card-reception housing (2B) of the card-distribution device (2) has at least one sensor which reports whether a drawn-in card (K) has been properly received or properly issued, the card-distribution device (2) being movable along the processing-parallelization axis (x) only after a satisfactory sensor report has been issued.

15. System according to claim 14,
**characterized in that**
a light barrier (2E, 2F) each is provided on the card-entry side in front of the feed rolls (2C) and on the card-exit side behind the feed rolls (2C), whereby
- immediately after the detection of a card transferred to the card-distribution device (2) by the card-entry-side light barrier (2E), the drive (21) for the feed rolls (2C) is started and after the card (K) has passed through this light barrier (2E) a report is generated which clears the card-distribution device (2) for travel along the processing-parallelization axis (x),
- after the card (2) has passed through the exit-side light barrier (2F) a report is generated which clears the card-distribution device (2) for travel along the processing-parallelization axis (x).

16. System according to claim 15,
**characterized in that**
the card-exit side light barrier (2F) switches off the motor (21) for the feed tolls (2C) immediately after detecting a received card (K), if the card-distribution device (2) has not yet reached the provided exit position.

17. System according to one of claims 11 to 16,
**characterized in that**
the card-reception housing (2B) has a card-guiding device each (2H) on the card-entry and card-exit side to guide the cards on the card-transport plane.

18. System according to claim 17,
**characterized in that**
the card-guiding device is formed from two guide rolls (2H) arranged at a distance one above the other, whose rotation axes run parallel to the processing-parallelization axis (x), the distance between the guide rolls (2H) being greater than one, and less than two, card thicknesses.

19. System according to one of claims 11 to 18,
**characterized in that**
the carriage (2A) of the card-distribution device (2) is mounted via a mounting plate (20A) directly on a circulating belt (20B), which is motor-drivable and transportable between two limiting positions.

20. System according to one of claims 11 to 19,
**characterized in that**
the carriage of the card-distribution device is held movable on at least one guide roll arranged parallel to the processing-parallelization axis (x), the carriage being connected to a circulating belt, running parallel to the guide roll, which is motor-transportable between two limiting positions and being movable therewith.

21. System according to one of claims 11 to 19,
**characterized in that**
the carriage of the card-distribution device is held movable on at least one guide roll arranged parallel to the processing-parallelization axis (x), the carriage being connected to two motor-drivable traction cables running parallel to the guide roll, and movable thereby.

22. System according to claim 11,
**characterized in that**
the carriage of the card-distribution device is movable via a motor-drivable threaded spindle arranged parallel to the processing-parallelization axis (x).

23. System according to one of the previous claims,
**characterized in that**
the system has at least one laser-inscription station (4) as a card body-processing station.

24. System according to one of the previous claims,
**characterized in that**
the system has three laser-inscription stations (4) and ten chip- and/or magnetic strip-processing stations (3).

25. System according to one of the previous claims,
**characterized in that**
the system has at least one embossing station as card body-processing station.

26. System according to one of the previous claims,
**characterized in that**
the system has at least one thermo-transfer printer as card body-processing station.

27. System according to one of the previous claims,
**characterized in that**
the system has at least one thermal sublimation printer as card body-processing station.

28. System according to one of the previous claims,
**characterized in that**
the system has at least one ink-jet printer as card body-processing station.

29. System according to one of the previous claims,
**characterized in that**
at least one card-stock magazine (6), one chip- and/or magnetic strip-processing station (3) and one laser station (4) are arranged aligned one behind the other.

30. System according to one of the previous claims,
**characterized in that**
structurally identical processing modules (M3,M4) of one processing type each with the same number of repeated processing stations (3,4) are in turn assembled together as a processing module (M3',M4') in processing-sequence direction (y) behind one another without the interposition of a card-distribution module (M2).

31. System according to one of the previous claims,
**characterized in that**
each processing module (M3,M4) has a park and/or bypass station (3*,4*) for cards.

## Revendications

1. Installation de traitement de cartes à puce et / ou à piste magnétique (K) constituée par les composants suivants:
- au moins un magasin de stockage (1) pour la réception des cartes à traiter,
- deux ou plusieurs postes de traitement de puces et / ou de pistes magnétiques (3) pour l'application de données /d'informations dans la puce et / ou sur la piste magnétique des cartes,
- au moins un poste de traitement de corps de cartes (4) pour l'application de données / d'informations non modifiables sur le corps des cartes,
- un système de transport de cartes pour le transport des cartes du ou des magasins de stockage (1) aux poste de traitement de puces et / ou de pistes magnétiques (3) et, ensuite, au ou aux postes de traitement de corps de cartes (4) et de là plus loin,
**caractériséee en ce que**
- l'installation présente un plan de transport de cartes (x, y) avec un axe d'évolution du traitement (y) et un axe de mise en parallèle du traitement (x) perpendiculaire à celui-ci, des postes de traitement (3, 4) de types de traitement différents étant disposés, à intervalles, les uns derrière les autres, le long de l'axe d'évolution du traitement (y) et des postes de traitement (3, 4), d'un seul type de traitement, réalisés en plusieurs exemplaires, étant disposés les uns à côté des autres, le long de l'axe de mise en parallèle du traitement (x), en tant que modules de traitement (M3, M4),
- l'installation est réalisée à partir des modules (M1, M2, M3, M4, M5) séparés, disposés les uns derrière les autres, le long de l'axe d'évolution du traitement (y), reliés ensemble de manière amovible et interchangeable, avec chacun son propre bâti de support (MT), et, pour préciser:
- un module de stockage de cartes (M1) qui présente un ou plusieurs magasins de stockage de cartes (1), disposés le long de l'axe de mise en parallèle du traitement (x),
- un premier module de distribution de cartes (M2) avec un dispositif de distribution de cartes (2) qui peut être déplacé le long de l'axe de mise en parallèle du traitement (x) et est en mesure, après accostage de chaque position de réception ou de remise de cartes, de recevoir, prendre en charge une carte (K) à partir d'un magasin de stockage de cartes (1) et / ou d'un poste de traitement (3, 4), et de la délivrer à un poste de traitement (3, 4),
- un module de traitement de puce et / ou de piste magnétique (M3) qui présente deux ou plusieurs postes de traitement de puces et / ou de pistes magnétiques (3), disposés les uns à côté des autres le long de l'axe de mise en parallèle du traitement (x),
- un deuxième module de distribution de cartes (M2) avec un dispositif de distribution de cartes (2) qui peut être déplacé le long de l'axe de mise en parallèle du traitement (x) et est en mesure, après accostage de chaque position de réception ou de remise de cartes, de recevoir, de prendre en charge une carte (K) à partir d'un poste de traitement (3, 4), et de la délivrer à un poste de traitement (3, 4),
- au moins un module de traitement de corps de cartes (M4) qui présente un ou plusieurs postes de traitement de corps de cartes (4) disposés les uns à côté des autres, le long de l'axe de mise en parallèle du traitement (x).

2. Installation selon la revendication 1,
**caractérisée en ce**
l'installation présente dans la direction d'évolution du traitement (y), en aval du dernier module de traitement de corps de cartes (M4), un module d'analyse d'images (M5) avec au moins un poste d'analyse d'images (5) pour le contrôle de l'exactitude et de la qualité des données appliquées sur le corps de carte.

3. Installation selon l'une des revendications précédentes,
**caractérisée en ce que**
l'installation présente dans la direction d'évolution du traitement (y), en aval du module d'analyse d'images (M5), au moins un module de dépôt de cartes (M6) avec au moins un magasin de dépôt (6) et un magasin de mise au rebut (6).

4. Installation selon l'une des revendications précédentes,
**caractérisée en ce que**
chaque bâti de support (MT) présente une plate-forme de réception de module.

5. Installation selon l'une des revendications précédentes,
**caractérisée en ce que**
les bâtis de support (MT) des modules (M1, ..., M6) sont réalisés en profilés d'aluminium, lesdits bâtis de support (MT1) en aluminium des différents modules pouvant être vissés les uns aux autres.

6. Installation selon l'une des revendications précédentes,
**caractérisée en ce que**
chaque bâti de support (MT) présente des pieds réglables en hauteur (MT2) pour ajuster les plans de traitement / de trans port de cartes des postes (1, 2, 3, 4, 5, 6) de chaque module (M1, ..., M6) au plan de transport de cartes (x, y) de l'installation.

7. Installation selon l'une des revendications précédentes,
**caractérisée en ce que**
les postes (1, 2, 3, 4, 5, 6) d'un module (M1, ..., M6) sont montés, étant amovibles et interchangeables, sur la plate-forme de réception (MT1).

8. Installation selon l'une des revendications précédentes,
**caractérisée en ce que**
les postes (1, ..., 6) d'un module (M1, ..., M6) peuvent être montés sur la plate-forme (MT), à des emplacements différents, le long de l'axe de mise en parallèle du traitement (x).

9. Installation selon l'une des revendications précédentes,
**caractérisée en ce que**
la plaque de réception (MT) d'un module (M1, ..., M6) présente un champ de trous de fixation pour la réception de vis de fixation, en vue du montage du/ des poste/s (1, 2, 3, 4, 5, 6) d'un module, à différents emplacements et / ou à différents intervalles les uns des autres.

10. Installation selon l'une des revendications 1 à 8,
**caractérisée en ce que**
le / les poste/s (1, ..., 6) d'un module sont tenus, déplaçables, sur la plate-forme de réception (MT).

11. Installation selon l'une des revendications précédentes,
**caractérisée en ce que**
l'installation de distribution de cartes (2) présente un chariot (2A) pouvant être déplacé par moteur, en continu ou pas à pas, le long de l'axe de mise en parallèle du traitement (x), chariot sur lequel est monté un boîtier de réception de cartes (2B), des rouleaux de transport (2C), commandés par moteur, pour la rentrée et la sortie de cartes, étant montés, à rotation sur des axes perpendiculaires à l'axe d'évolution du traitement (y), dans le boîtier de réception de cartes (2B).

12. Installation selon la revendication 11,
**caractérisée en ce que**,
dans le boîtier de réception de cartes (2B), sont prévus au moins 3 paires de rouleaux de transport (2C), superposés deux par deux, accueillant respectivement entre eux les cartes (K), en contact par friction, dans le plan de transport de cartes (x, y), un rouleau de transport (2C) de chaque paire de rouleaux de transport pouvant être commandé par moteur.

13. Installation selon l'une des revendications 11 ou 12,
**caractérisée en ce que**
la direction d'entraînement des rouleaux de transport (2C) est réversible.

14. Installation selon l'une des revendications 11 a 13,
**caractérisée en ce que**
le boîtier de réception de cartes (2B) du dispositif de distribution de cartes (2) présente au moins un détecteur qui informe si une carte introduite (K) a été convenablement prise en charge resp. convenablement délivrée, et **en ce que** le dispositif de distribution de cartes (2) ne peut être déplacé le long de l'axe de mise en parallèle du traitement (x) qu'après réception d'un message conforme du détecteur.

15. Installation selon la revendication 14,
**caractérisée en ce que**,
côté entrée de carte, en amont des rouleaux de transport (2C), et, côté sortie de cartes, en aval des rouleaux de transport (2C), est respectivement prévue une barrière lumineuse (2E, 2F),
- l'entraînement (21) des rouleaux de transport (2C) étant démarré directement après qu'une carte, remise au dispositif de distribution de cartes (2), a été détectée par la barrière lumineuse (2E), côté entrée, et, après que ladite carte (K) a traversé la barrière lumineuse (2E) un message est généré, lequel libère le déplacement du dispositif de distribution de cartes (2) le long de l'axe de mise en parallèle du traitement (x),
- un message étant généré, après que le dispositif de distribution de carte (2) a traversé la barrière lumineuse (2F), lequel message libère le déplacement du dispositif de distribution de cartes (2) le long de l'axe de mise en parallèle du traitement (x).

16. Installation selon la revendications 15,
**caractérisée en ce que**
la barrière lumineuse (2F), côté sortie de cartes, directement après la détection d'une carte (K) reçue, arrête l'entraînement (21) des rouleaux de transport (2C) quand ledit dispositif de distribution de cartes (2) n'a pas encore atteint la position de délivrance prévue.

17. Installation selon l'une des revendications 11 à 16,
**caractérisée en ce que**
le boîtier de réception de cartes (2B) présente, respectivement, sur le côté entrée des cartes et sur le côté sortie des cartes, un dispositif de guidage de cartes (2H) pour le guidage des cartes sur le plan de transport de cartes.

18. Installation selon la revendication 17,
**caractérisée en ce que**
le dispositif de guidage de cartes est formé par deux rouleaux de guidage (2H), disposés à distance l'un de l'autre, dont les axe de rotation sont parallèles à l'axe de mise en parallèle du traitement (x), l'intervalle entre les rouleaux de guidage (2H) étant supérieur à une épaisseur de carte et inférieur à l'épaisseur de deux cartes.

19. Installation selon l'une des revendications 11 à 18,
**caractérisée en ce que**
le chariot (2A) du dispositif de distribution de cartes (2) est monté, au moyen d'une plaque de montage (20A), directement sur une courroie (20B) continue, entralin ßee par moteur, et déplaçable entre deux positions de limitation.

20. Installation selon l'une des revendications 11 à 19,
**caractérisée en ce que**
le chariot du dispositif de distribution de cartes est maintenu mobile sur au moins un rail de guidage disposé parallèlement à l'axe de mise en parallèle du traitement (x), ledit chariot étant relié à une courroie continue, orientée parallèlement au rail de guidage, entraînée par moteur entre deux positions de limitation, et pouvant être déplacé par celle-ci.

21. Installation selon l'une des revendications 11 à 19,
**caractérisée en ce que**
le chariot du dispositif de distribution de cartes est maintenu mobile sur au moins un rail de guidage disposé parallèlement à l'axe de mise en parallèle du traitement (x), ledit chariot étant relié à deux câbles de traction à commande motorisée, orientés parallèlement au rail de guidage, et pouvant être déplacé par ceux-ci.

22. Installation selon la revendications 11,
**caractérisée en ce que**
le chariot du dispositif de distribution de cartes peut être déplacé au moyen d'une broche filetée entraînée par moteur, disposée parallèlement à l'axe de mise en parallèle du traitement (x).

23. Installation selon l'une des revendications précédentes,
**caractérisée en ce que**
l'installation présente au moins un poste d'écriture laser (4) en tant que poste de traitement de corps de cartes.

24. Installation selon l'une des revendications précédentes,
**caractérisée en ce que**
l'installation présente trois poste d'écriture laser (4) et dix postes de traitement de puces et ou de pistes magnétiques (3).

25. Installation selon l'une des revendications précédentes,
**caractérisée en ce que**
l'installation présente au moins un poste d'estampage en relief en tant que poste de traitement de corps de cartes.

26. Installation selon l'une des revendications précédentes,
**caractérisée en ce que**
l'installation présente au moins une imprimante à transfert thermique en tant que poste de traitement de corps de cartes.

27. Installation selon l'une des revendications précédentes,
**caractérisée en ce que**
l'installation présente au moins une imprimante à sublimation thermique en tant que poste de traitement de corps de cartes.

28. Installation selon l'une des revendications précédentes,
**caractérisée en ce que**
l'installation présente au moins une imprimante à jet d'encre en tant que poste de traitement de corps de cartes.

29. Installation selon l'une des revendications précédentes,
**caractérisée en ce que**
au moins un magasin de stockage de cartes (6), un poste de traitement de puces et / ou de pistes magnétiques (3) et un poste laser (4) sont disposés, alignés les uns derrière les autres.

30. Installation selon l'une des revendications précédentes,
**caractérisée en ce que**
des modules de même construction (M3, M4), d'un même type de traitement, avec chacun le même nombre de postes de traitement réalisés en plusieurs exemplaires (3, 4), sont groupés, les uns derrière les autres, dans la direction d'évolution du traitement (y), sans insertion d'un module de distribution de cartes (M2), en tant que module de traitement (M3', M4').

31. Installation selon l'une des revendications précédentes,
**caractérisée en ce que**
chaque module de traitement (M3, M4) présente un poste de parcage et / ou bypass (3*, 4*) pour cartes.
